# NEUE EUROPÄISCHE PATENTSCHRIFT

(11) **EP 2 582 560 B2**
(45) Veröffentlichungstag und Bekanntmachung des Hinweises auf die Entscheidung über den Einspruch: **31.03.2021**
(45) Hinweis auf die Patenterteilung: 07.05.2014
(21) Anmeldenummer: 11711777.0
(22) Anmeldetag: 25.03.2011
(51) Int. Cl.: B60T 13/68, B60T 17/00, B60T 17/02, F04B 49/02, F04B 49/22

(54) **EINRICHTUNG, VERFAHREN UND SYSTEM ZUR DRUCKLUFTSTEUERUNG UND DRUCKLUFTVERSORGUNG**
DEVICE, METHOD, AND SYSTEM FOR COMPRESSED AIR CONTROL AND COMPRESSED AIR SUPPLY
DISPOSITIF, PROCÉDÉ ET SYSTÈME DE COMMANDE PNEUMATIQUE ET D'ALIMENTATION PNEUMATIQUE

(30) Priorität: 21.06.2010 DE 102010024476
(43) Veröffentlichungstag der Anmeldung: 24.04.2013
(73) Patentinhaber: WABCO GmbH, 30453 Hannover (DE)
(72) Erfinder: DIEKMEYER, Heinrich, 30890 Barsinghausen (DE); FEYERABEND, Konrad, 30625 Hannover (DE)
(74) Vertreter: Lauerwald, Jörg
(86) Internationale Anmeldenummer: PCT/EP2011/001495
(87) Internationale Veröffentlichungsnummer: WO 2011/160738

(56) Entgegenhaltungen:
- EP-A2- 0 976 635
- EP-B1- 1 042 151
- EP-B1- 1 208 026
- EP-B1- 1 318 936
- EP-B1- 1 355 813
- WO-A1-2008/095702
- WO-A1-2010/051868
- WO-A2-2008/113552
- DE-A1-102005 057 003
- DE-A1-102006 023 681
- DE-B3-102005 057 004
- DE-B3-102006 034 762
- DE-B4- 19 737 051

## Beschreibung

Die Erfindung betrifft eine Druckluftsteuerungseinrichtung zur Steuerung jeweiliger Betriebszustände eines Kompressors und einer Lufttrocknungseinrichtung, ein Druckluftsteuerungsverfahren zum Betrieb dieser Druckluftsteuerungseinrichtung, eine elektronische Steuereinrichtung zur Steuerung des Druckluftsteuerungsverfahrens, ein Druckluftversorgungssystem mit der Druckluftsteuerungseinrichtung und der elektronischen Steuereinrichtung, ein Druckluftversorgungsverfahren zum Betrieb des Druckluftversorgungssystems und ein Fahrzeug mit dem Druckluftversorgungssystem bzw. mit der Druckluftsteuerungseinrichtung und der elektronischen Steuereinrichtung.

Druckluftversorgungssysteme werden in Fahrzeuge, insbesondere Nutzfahrzeugen, eingesetzt, um Drucklufteinrichtungen bzw. pneumatische Systeme des Fahrzeugs mit Druckluft zu versorgen. Derartige Drucklufteinrichtungen sind bspw. eine Luftfederung und eine Bremsanlage.

Derartige bekannte Druckluftversorgungssysteme weisen einen Kompressor auf, der die Druckluft bereitstellt. Ferner weisen derartige bekannte Druckluftversorgungssysteme eine Lufttrocknungseinrichtung auf, in der die vom Kompressor bereitgestellte Druckluft durch Lufttrocknungsmittel, wie bspw. einen Filter und einen Abscheider, von Partikeln und Feuchtigkeit bzw. Kondensat befreit wird, da es ansonsten die angeschlossenen Drucklufteinrichtungen beschädigen und deren Funktion, bspw. die Bremswirkung einer Bremsanlage beeinträchtigen könnte. Eine derartige Druckluftversorgungsanlage ist beispielsweise aus der DE 10 2005 057 003 A1 und aus WO 2010/051868 A1 bekannt.

Bei einem derartigen bekannten Druckluftsteuerungssystem ist ein pneumatisch zu betätigendes Entlüftungssteuerventil bzw. eine Druckluftsteuerungseinrichtung mit diesem Entlüftungssteuerungsventil vorgesehen, um Betriebszustände des Kompressors und der Lufttrocknungseinrichtung zu steuern. Ein derartiges Entlüftungssteuerventil bzw. eine derartige Druckluftsteuerungseinrichtung wird auch als Governor bezeichnet. Der über die Lufttrocknungseinrichtung bereitgestellte Systemdruck wird in einer Systemdruckleitung an einen Steuereingang des Entlüftungssteuerventils geführt. Ab einem vorgegebenen Systemdruck schaltet das Entlüftungssteuerventil den Systemdruck über eine Kompressorsteuerleitung zu einem Steuereingang des Kompressors sowie über eine Entlüftungssteuerleitung zu einem Steuereingang eines pneumatischen Entlüftungsventils der Lufttrocknungseinrichtung durch. Dadurch wird zum einen der Kompressor von einem Betriebszustand "Fördern" in einen Betriebszustand "Warten" umgeschaltet, so dass sich der Systemdruck nicht weiter erhöhen kann. Zum anderen wird die Lufttrocknungseinrichtung von einem Betriebszustand "Förderung" in einen Betriebszustand "Regeneration" umgeschaltet, wobei nämlich die Lufttrocknungsmittel entgegen einer Förderrichtung durchströmt werden und Druckluft durch das Entlüftungsventil zu einer Entlüftung entlüftet wird. Dabei werden die Lufttrocknungsmittel in einem sog. Regenerationsvorgang bzw. Spülvorgang gereinigt und von Kondensat befreit.

Wenn der Systemdruck unter einen bestimmten Grenzwert gefallen ist, schaltet das Entlüftungssteuerventil wieder um, so dass die Entlüftungssteuerleitung und die Kompressorsteuerleitung durch das Entlüftungssteuerventil zu einer Entlüftung entlüftet werden. An den Steuereingängen des Kompressors und des Entlüftungsventils liegt folglich Umgebungsluftdruck an, wobei der Kompressor wieder in seinen Betriebszustand "Fördern" und die Lufttrocknungseinrichtung wieder in ihren Betriebszustand "Förderung" umschaltet.

Nachteilig an diesem bekannten Druckluftversorgungssystem bzw. Druckluftversorgungsverfahren ist, dass die Betriebszustände des Kompressors und der Lufttrocknungseinrichtung in Abhängigkeit von einem aktuellen Druckluftbedarf der angeschlossenen Drucklufteinrichtungen des Fahrzeugs unterschiedlich häufig und für unterschiedlich lange Zeitdauern und damit eher zufällig eingenommen werden. Sog. Schubphasen, in denen der den Kompressor antreibende Motor durch den Fahrbetrieb, bspw. bei einer Bergabfahrt des Fahrzeugs, ohne Kraftstoffzufuhr betrieben wird, lassen sich dabei energetisch nicht effizient nutzen. Zudem muss der Kompressor nach jeder Regeneration der Lufttrocknungseinrichtung zunächst in Druckluftleitungen zwischen dem Kompressor und der Lufttrocknungseinrichtung bzw. der Systemdruckleitung und ggf. in einem mit der Lufttrocknungseinrichtung pneumatisch verbundenen Druckluftvorratsbehälter den Druck auf den aktuellen Systemdruck erhöhen, bevor dieser Systemdruck erhöht werden kann.

Aus US 6,036,449 A ist ein anderes Druckluftversorgungssystem bekannt, das sich von dem vorstehend beschriebenen Druckluftversorgungssystem dadurch unterscheidet, dass anstelle des pneumatisch betätigbaren Entlüftungssteuerventils ein elektrisch betätigbares Entlüftungssteuerventil vorgesehen ist. Dadurch sind die starren Grenzen, bei denen das Entlüftungssteuerventil umschaltet, aufgehoben. Insbesondere kann eine elektronische Steuereinrichtung unabhängig vom jeweiligen Systemdruck die Entlüftungssteuerleitung und die Kompressorsteuerleitung mit diesem Systemdruck beaufschlagen oder diese beiden Steuerleitungen entlüften. Das Druckluftversorgungssystem der US 6,036,449 A ermöglicht somit ein flexibleres Steuern der Regeneration der Lufttrocknungseinrichtung.

Dieses bekannte Druckluftversorgungssystem der US 6,036, 449 A weist jedoch mehrere Nachteile auf. Insbesondere weist dieses bekannte Druckluftversorgungssystem ebenso wie das erstgenannte Druckluftversorgungssystem mit dem pneumatisch betätigbaren Entlüftungssteuerventilen einen hohen Energieverbrauch auf, insbesondere da der Kompressor häufig und lange vom Motor des Fahrzeugs betrieben werden muss, um nach der Regeneration der Luftsteuerungseinrichtung wieder einen Luftdruck, insbesondere in der Druckluftleitung, die vom Kompressor zur Lufttrocknungseinrichtung führt, aufzubauen, der dem Systemdruck entspricht, bevor der Systemdruck erhöht werden kann.

Der Erfindung liegt daher die Aufgabe zugrunde, die Druckluftversorgung eines Fahrzeugs zu verbessern.

Die Erfindung löst diese Aufgabe mit einer Druckluftsteuerungseinrichtung nach Anspruch 1, mit einem Druckluftversorgungsverfahren nach Anspruch 4, mit einer elektronischen Steuereinrichtung nach Anspruch 8, mit einem Druckluftversorgungssystem nach Anspruch 10, mit einem Druckluftversorgungsverfahren nach Anspruch 12 und mit einem Fahrzeug nach Anspruch 14.

Insbesondere löst die Erfindung die Aufgabe mit einer neuartigen Druckluftsteuerungseinrichtung bzw. einem neuen Druckluftsteuerungsverfahren. Entscheidend dabei ist, dass bei einer Druckluftsteuerungseinrichtung gemäß dem Oberbegriff des Anspruchs 1 zusätzlich zum Entlüftungssteuerventil ein elektrisch betätigbares Zufuhrsteuerventil vorgesehen ist, mittels dem zum Schalten des Betriebszustands des Kompressors der Systemdruckeingang unabhängig vom Systemdruck pneumatisch mit dem Kompressorsteuerausgang verbindbar ist. Dadurch kann die Kompressorsteuerleitung mit dem Systemdruck beaufschlagt werden, auch wenn der Systemdruck noch nicht zum Umschalten des Entlüftungssteuerventils ausreicht. In der Kompressorsteuerleitung und in der Entlüftungssteuerleitung können somit unterschiedliche Drücke vorliegen, so dass der Kompressor ausgeschaltet bzw. in einen Betriebszustand "Warten" geschalten werden kann, ohne dass gleichzeitig ein Regenerationsvorgang bzw. Spülvorgang in der Lufttrocknungseinrichtung ausgelöst wird. Die Druckluftsteuerungseinrichtung kann selbstverständlich mehr als einen Systemdruckeingang aufweisen. Auch andere Komponenten der Erfindung können ggf. in einer Mehrzahl vorgesehen sein. Wörter wie "ein" oder "einen", insbesondere in den Ansprüchen, sind als unbestimmte Artikel und nicht als Zahlwörter zu verstehen.

Wenn der Systemdruck abfällt, kann der Systemdruck durch Schalten des Zufuhrsteuerventils und Entlüftung der Kompressorsteuerleitung über das Zufuhrsteuerventil zum Erhöhen des Systemdrucks wieder in den Betriebszustand "Fördern" geschaltet werden. Dabei muss der Kompressor jedoch keine Energie zum Druckluftaufbau wie nach einem Entlüften aufwenden. Insbesondere kann der eingeschaltete Kompressor sofort den Systemdruck erhöhen, ohne dass zuvor dieser Systemdruck erst in der gespülten und somit entlüfteten Lufttrocknungseinrichtung aufgebaut werden müsste. Die Erfindung ermöglicht somit eine energiesparende Druckluftversorgung durch eine intelligente Ansteuerung des Kompressors und der Lufttrocknungseinrichtung, insbesondere durch die Ansteuerung des Kompressors unabhängig vom Systemdruck.

Ein Druckaufbau des Systemdrucks kann mittels der Erfindung flexibel und schnell gestartet und beendet werden. Insbesondere kann für eine vergleichsweise geringfügige Druckerhöhung der Kompressor für eine vergleichsweise kurze Zeitdauer eingeschaltet werden und dies ggf. den Anforderungen entsprechend mehrmals wiederholt werden, wobei der Systemdruck unmittelbar bzw. nach sehr kurzer Zeit erhöht werden kann, da keine Druckverluste eines etwaigen Spülvorgangs ausgeglichen werden müssen.

Zudem wird mittels der Erfindung eine wirkungsvolle Spülung der Lufttrocknungseinrichtung bzw. der Lufttrocknungsmittel in dieser Lufttrocknungseinrichtung erreicht die an die Erfordernisse einer tatsächlichen oder vermuteten Kondensatbildung bzw. Verschmutzung angepasst sein kann.

Weitere Vorteile der Erfindung sind, dass der Kompressor flexibel abgeschaltet werden kann, während bspw. ein Benzinmotor, der das Fahrzeug und den Kompressor antreibt, gestartet wird. Somit wird der Startvorgang des Benzinmotors erleichtert. Zusätzlich kann der Kompressor zeitweilig abgeschaltet werden, wenn eine maximale Leistung des Motors für den Fahrbetrieb des Fahrzeugs abgerufen werden soll.

Schließlich spart die Erfindung Kraftstoff, der die Energie zum Antrieb des Motors und somit zum Betrieb des Kompressors liefert. Durch die optimierte Spülung und kürzere Laufzeiten des Kompressors erhöhen sich zudem die Lebensdauer des Kompressors sowie ggf. weiterer Drucklufteinrichtungen des Fahrzeugs, die aufgrund der optimierten Spülung besonders gut vor Wasser in der Druckluft und damit bspw. vor Korrosionsschäden geschützt sind.

Die Erfindung löst die Aufgabe ferner mit einem Druckluftsteuerungsverfahren nach Anspruch 4, welches einem Verfahren zum Betrieb der Druckluftsteuerungseinrichtung nach Anspruch 1 entspricht. Insbesondere schaltet erfindungsgemäß das elektrisch betätigbare Zufuhrsteuerventil der Druckluftsteuerungseinrichtung den Betriebszustand des Kompressors dadurch, dass es den Systemdruckeingang unabhängig vom Systemdruck pneumatisch mit dem Kompressorsteuerausgang verbindet oder gegen eine vom Systemdruck unabhängige Verbindung zum Systemdruckeingang absperrt.

Besonders bevorzugt ist das Entlüftungssteuerventil ein pneumatisch betätigbares Ventil. In diesem Fall kann das Entlüftungssteuerventil auch im Falle eines Elektronikausfalls bzw. Ausfalls einer elektrischen Ansteuerbarkeit noch pneumatisch betätigt werden.

Alternativ, jedoch weniger bevorzugt, ist das Entlüftungssteuerventil ein elektrisch betätigbares Ventil. In diesem Fall können Grenzwerte, bei denen das Entlüftungssteuerventil schalten soll, sehr fein eingestellt und ggf. verändert werden.

Das Entlüftungssteuerventil ist bevorzugt separat von der Lufttrocknungseinrichtung angeordnet. Insbesondere ist eine bauliche Einheit, welche die Druckluftsteuerungseinrichtung oder das Entlüftungssteuerventil aufweisende Teile der Druckluftsteuerungseinrichtung umfasst, separat von einer anderen baulichen Einheit, welche die Lufttrocknungseinrichtung umfasst, angeordnet. Diese beiden Einheiten sind nicht unmittelbar miteinander verbunden und somit auch nicht aneinander angeflanscht. Insbesondere sind diese Einheiten an unterschiedlichen Stellen am Fahrzeug bzw. Fahrzeugrahmen verbaut.

Erfindungsgemäß weist das Zufuhrsteuerventil zwei Schaltzustände auf. Im Falle eines ersten Schaltzustands verbindet das Zufuhrsteuerventil den Kompressorsteuerausgang mit dem Entlüftungssteuerausgang der Druckluftsteuerungseinrichtung oder mit einer Entlüftung. Im Falle eines zweiten Schaltzustands verbindet hingegen das Zufuhrsteuerventil den Kompressorsteuerausgang pneumatisch mit dem Systemdruckeingang der Druckluftsteuerungseinrichtung. Dies geschieht jeweils unabhängig vom Systemdruck, so dass unabhängig von einer Schaltstellung des Entlüftungssteuerventils die Kompressorsteuerleitung ggf. mit dem Systemdruck beaufschlagt werden kann.

In einer vorteilhaften Weiterbildung ist ein Drucksensor in der Druckluftsteuerungseinrichtung vorgesehen, der den Systemdruck sensiert. Der Drucksensor ist hierfür mit dem Systemdruckeingang pneumatisch verbunden. Vorzugsweise wird der sensierte Systemdruck als Parameter für eine elektrische Ansteuerung des Zufuhrsteuerventils herangezogen. Dadurch kann in Abhängigkeit vom jeweiligen Systemdruck entschieden werden, welchen Betriebszustand der Kompressor einnehmen soll. Bspw. kann so eine Regelung des Systemdrucks erfolgen, wobei der Systemdruck in einem begrenzten Druckintervall gehalten wird, dass in Abhängigkeit weiterer Parameter verändert, insbesondere verschoben und/oder vergrößert bzw. verkleinert, werden kann. Alternativ ist der Drucksensor ein externer Drucksensor, der druckmittelverbindend mit der Systemdruckleitung verbunden ist.

Die Druckluftsteuerungseinrichtung ist vorzugsweise als bauliche Gesamteinheit ausgebildet oder weist eine erste bauliche Einheit mit dem Entlüftungssteuerventil und eine mit der ersten Einheit mechanisch und pneumatisch verbindbare zweite bauliche Einheit mit dem Zufuhrsteuerventil auf. Insbesondere ist die Lufttrocknungseinrichtung eine separate Einheit, die nicht mit der Druckluftsteuerungseinrichtung integriert, sondern vorzugsweise an anderer Stelle am Fahrzeug verbaut werden kann. Dadurch kann eine herkömmliche Lufttrocknungseinrichtung für die Erfindung verwendet werden.

In einer vorteilhaften Weiterbildung ist die Druckluftsteuerungseinrichtung derart ausgebildet, dass sie an dem Kompressor befestigt, insbesondere angeflanscht, werden kann. In dem Fall, dass die Druckluftsteuerungseinrichtung die zwei genannten baulichen Einheiten aufweist, ist vorzugsweise die zweite bauliche Einheit, die das Zufuhrsteuerventil aufweist an den Kompressor anflanschbar. Dies ist von Vorteil, da das Zufuhrsteuerventil über die Kompressorsteuerleitung mit dem Kompressor verbunden werden soll, wobei eine derartige pneumatische Verbindung durch Anflanschen der zweiten Einheit bzw. der Gesamteinheit an den Kompressor leicht hergestellt werden kann.

In dem Fall, dass die Druckluftsteuerungseinrichtung die beiden baulichen Einheiten aufweist, ist die erste Einheit vorzugsweise an der zweiten Einheit befestigt, insbesondere angeflanscht. Somit ergibt sich eine kompakte Anordnung von Kompressor und Druckluftsteuerungseinrichtung.

Die Erfindung löst die Aufgabe ferner mittels einer elektronischen Steuereinrichtung nach Anspruch 8. Die elektronische Steuereinrichtung steuert jeweilige Betriebszustände des Kompressors und der Lufttrocknungseinrichtung mittels des erfindungsgemäßen Druckluftsteuerungsverfahrens bzw. ermöglicht eine Druckluftsteuerung mittels der erfindungsgemäßen Druckluftsteuerungseinrichtung.

Hierfür weist die elektronische Steuereinrichtung Entscheidungsmittel auf, mittels denen sie eine erste Entscheidung ermittelt, nämlich ob die Lufttrocknungseinrichtung einem Betriebszustand "Förderung" oder einem Betriebszustand "Regeneration" einnehmen soll. Ferner ermitteln die Entscheidungsmittel eine zweite Entscheidung unter Heranziehung der ersten Entscheidung, nämlich ob der Kompressor in einem Betriebszustand "Fördern" oder in einem Betriebszustand "Warten" belassen oder in den jeweils anderen Betriebszustand umgeschaltet werden soll.

Die elektronische Steuereinrichtung weist Zufuhrsteuerventilansteuerungsmittel auf, mittels denen das Zufuhrsteuerventil gemäß der zweiten Entscheidung angesteuert werden kann. So wird mittels eines elektrischen Signals das Zufuhrsteuerventil bspw. in einen bestromten Zustand versetzt, um den Druck in der Kompressorsteuerleitung zumindest soweit zu erhöhen, dass der Kompressor ausschaltet bzw. in einen Betriebszustand "Warten" umschaltet.

Insbesondere weist die elektronische Steuereinrichtung ferner Mittel zur Steuerung des erfindungsgemäßen Druckluftsteuerungsverfahrens auf.

Die elektronische Steuerung ermöglicht somit eine intelligente Steuerung der Betriebszustände des Kompressors und der Lufttrocknungseinrichtung unter Berücksichtigung des Systemdrucks.

In einer vorteilhaften Weiterbildung weist die elektronische Steuereinrichtung ferner Speichermittel auf, mittels denen sie einen zeitlichen Verlauf des Systemdrucks und/oder Schaltzustände des Zufuhrsteuerventils speichert, wobei die Entscheidungsmittel diesen zeitlichen Verlauf vorzugsweise zum Ermitteln der jeweiligen Entscheidung heranziehen.

Gemäß dem erfindungsgemäßen Druckluftsteuerungsverfahren wird nach festgelegten oder erlernbaren Regeln entschieden, ob die Lufttrocknungseinrichtung von einem Betriebszustand "Förderung" zum Erhöhen des Systemdrucks in einen Betriebszustand "Regeneration" zum Spülen der Lufttrocknungseinrichtung umgeschaltet werden soll. Die Entscheidungsmittel der elektronischen Steuereinrichtung führen diese Entscheidungen durch.

In dem Fall, dass in den Betriebszustand "Regeneration" umgeschaltet werden soll, wird das Zufuhrsteuerventil von den Zufuhrsteuerventilansteuerungsmitteln derart angesteuert, dass es in seinem ersten Schaltzustand belassen wird, bis eine Umschaltschwelle des Entlüftungssteuerventils erreicht ist. Andernfalls wird dieses Zufuhrsteuerventil derart angesteuert, dass es in seinen zweiten Schaltzustand umgeschaltet wird, sobald der Systemdruck einen oberen Grenzwert erreicht oder überschreitet. Der Grenzwert kann ein vorbestimmter bzw. festgelegter, einstellbarer oder ein erlernter Grenzwert sein. Vorzugsweise liegt der obere Grenzwert unterhalb der Umschaltschwelle des Entlüftungssteuerventils.

Nachfolgend wird das Zufuhrsteuerventil derart angesteuert, dass das Zufuhrsteuerventil maximal so lange im zweiten Schaltzustand belassen wird, bis der Systemdruck einen unteren Grenzwert erreicht oder unterschreitet.

Vorzugsweise wird das Zufuhrsteuerventil auch bei einem Systemdruck oberhalb dieses unteren Grenzwerts schon in seinen ersten Schaltzustand umgeschaltet, wenn entschieden wird, dass in den Betriebszustand "Regeneration" oder "Fördern" umgeschaltet werden soll. In dem Fall, dass eine Schubphase erkannt wird, wird zum Ausnutzen zur Verfügung stehender Energie vorzugsweise der Kompressor in den Betriebszustand "Fördern" versetzt. Eine Schubphase liegt in dem Zusammenhang vor, wenn kein Kraftstoff verbraucht wird bzw. eine Motorlast, insbesondere ein am CAN-Bus vorliegendes Motorlastsignal, Null ist. Auch zum Auslösen der Regeneration muss der Kompressor eingeschaltet werden, um den Systemdruck zum Schalten des Entlüftungssteuerventils aufzubauen.

Der zweite Schaltzustand des Zufuhrsteuerventils ist vorzugsweise ein bestromter Schaltzustand, wohingegen der erste Schaltzustand ein unbestromter Schaltzustand ist. Im Falle eines Stromausfalls bzw. Ausfalls der elektronischen Steuereinrichtung kann der Kompressor somit immer noch pneumatisch geschaltet werden, wobei zwar nicht die erfindungsgemäßen energiesparenden Vorteile erreicht werden, wobei jedoch ein Betrieb des Fahrzeugs bzw. der versorgten Drucklufteinrichtungen des Fahrzeugs aufrechterhalten werden kann.

Der Kompressor wird spätestens dann eingeschaltet bzw. in den Betriebszustand "Fördern" versetzt, wenn der untere Grenzwert des Drucks erreicht oder unterschritten wird. Dies wird dadurch erreicht, dass das Zufuhrsteuerventil in seine erste Schaltstellung schaltet.

Der Systemdruck wird in einem Druckband zwischen dem oberen Grenzwert und dem unteren Grenzwert gehalten. Dies wird durch wechselndes Einnehmen der Betriebszustände "Fördern" und "Warten" des Kompressors, in Abhängigkeit von wenigstens einem Fahrzeugzustand, erreicht. Ein derartiger Fahrzeugzustand ist bspw. eine Drehzahl des Motors, eine Fahrzeuggeschwindigkeit und/oder eine Motorlast, insbesondere der lastfreie Betrieb des Motors in Schubphasen. Vorzugsweise wird der Kompressor in Abhängigkeit mehrerer dieser Fahrzeugzustände mittels des Zufuhrsteuerventils geschaltet.

In einer vorteilhaften Weiterbildung ist die elektronische Steuereinrichtung in eine Motorsteuereinrichtung zur elektronischen Steuerung eines Verbrennungsmotors integriert. Dies ist von Vorteil, da der Kompressor ohnehin in räumlicher Nähe zum Verbrennungsmotor angeordnet ist und somit vorzugsweise auch die Druckluftsteuerungseinrichtung bzw. die zweite bauliche Einheit der Druckluftsteuerungseinrichtung mit dem Zufuhrsteuerventil in räumlicher Nähe zum Motor angeordnet ist. Es braucht somit keine zusätzliche Steuerungselektronik vorgesehen werden, was Kosten spart.

Zudem können der in die Motorsteuereinrichtung integrierten elektronischen Steuereinrichtung auf vorteilhafte Weise Motorparameter bei der Steuerung, insbesondere der Ansteuerung des Kompressors, berücksichtigt werden. Bspw. kann die elektronische Steuereinrichtung derart ausgebildet sein, dass sie beim Starten des Motors den Kompressor in seinem Betriebszustand "Warten" belässt, um den Motor dabei nicht durch die Erzeugung von Druckluft zu belasten, um somit den Startvorgang zu vereinfachen. Ferner kann die elektronische Steuereinrichtung dafür sorgen, dass der Kompressor in seinen Betriebszustand "Warten" geschaltet oder in diesem Betriebszustand "Warten" belassen wird, wenn Leistungsspitzen des Motors, bspw. für eine maximale Beschleunigung des Fahrzeugs benötigt werden. Somit beeinflusst die Erfindung auch vorteilhaft das Betriebsverhalten bzw. Fahrverhalten des Fahrzeugs, dass die erfindungsgemäßen Komponenten aufweist. Dabei kann eine Berücksichtigung von Parametern, die in der Motorsteuereinrichtung vorliegen, selbstverständlich auch dann erfolgen, wenn die elektronische Steuereinrichtung separat von der Motorsteuereinrichtung vorgesehen bzw. angeordnet ist, indem bspw. eine Datenleitung zwischen der Motorsteuereinrichtung und der erfindungsgemäßen elektronischen Steuereinrichtung vorgesehen wird.

Die Erfindung löst die Aufgabe ferner mit einem Druckluftversorgungssystem für ein Fahrzeug, insbesondere Nutzfahrzeug, nach Anspruch 10. Das Druckluftversorgungssystem weist die erfindungsgemäße Druckluftsteuerungseinrichtung und die erfindungsgemäße elektronische Steuereinrichtung auf. Mittels dieser Steuereinrichtung ist das Zufuhrsteuerventil elektrisch ansteuerbar. Ferner weist das Druckluftversorgungssystem einen Kompressor auf, dessen Steuereingang pneumatisch mit dem Kompressorsteuerausgang der Druckluftsteuerungseinrichtung verbunden ist. Ferner weist das Druckluftversorgungssystem eine Systemdruckleitung auf, die vom Kompressor mit Druckluft versorgt werden kann. Die Systemdruckleitung weist vorzugsweise wenigstens einen Anschluss für wenigstens eine Drucklufteinrichtung, bspw. eine Luftfederung oder eine Bremsanlage, des Fahrzeugs auf. Die Systemdruckleitung ist pneumatisch mit dem Systemdruckeingang der Druckluftsteuerungseinrichtung verbunden. Schließlich weist das Druckluftversorgungssystem eine Lufttrocknungseinrichtung auf, die mit einem Druckluftausgang des Kompressors und mit der Systemdruckleitung pneumatisch verbunden ist. Die Systemdruckleitung kann durch die Lufttrocknungseinrichtung vom Kompressor mit Druckluft versorgt werden, so dass die vom Kompressor bereitgestellte Druckluft gefiltert bzw. von Kondensat befreit die Systemdruckleitung erreicht.

Die Erfindung löst die Aufgabe ferner mit einem entsprechenden Druckluftversorgungsverfahren für ein Fahrzeug, wobei die elektronische Steuereinrichtung das Zufuhrsteuerventil elektrisch ansteuert, wobei der Kompressor über eine pneumatische Verbindung seines Steuereingangs mit dem Kompressorsteuerausgang der Druckluftsteuerungseinrichtung gesteuert wird, wobei die Systemdruckleitung vom Kompressor mit Druckluft versorgt wird, wobei die Systemdruckleitung wenigstens eine Drucklufteinrichtung des Fahrzeugs über wenigstens einen Anschluss mit Druckluft versorgt und wobei die Systemdruckleitung den Systemdruck über den Systemdruckeingang der Druckluftsteuerungseinrichtung zuführt. Die Systemdruckleitung wird dabei durch die Lufttrocknungseinrichtung vom Kompressor mit Druckluft versorgt.

Die Lufttrocknungseinrichtung weist vorzugsweise Lufttrocknungsmittel und ein pneumatisch betätigbares Entlüftungsventil auf, dessen Steuereingang pneumatisch mit der Entlüftungssteuerleitung verbunden ist und mittel dem in Abhängigkeit vom Druck in der Entlüftungssteuerleitung eine Entlüftungsleitung mit einer Entlüftung verbindbar oder gegen diese Entlüftung absperrbar ist. Insbesondere ist der Steuereingang der Lufttrocknungseinrichtung durch diesen Steuereingang des Entlüftungsventils gegeben. Im Betriebszustand "Förderung" der Lufttrocknungseinrichtung werden Lufttrocknungsmittel der Lufttrocknungseinrichtung in einer Förderrichtung von Druckluft durchströmt und filtern dabei Feuchtigkeit aus dieser Druckluft heraus. Lufttrocknungsmittel können dabei bspw. ein Filter und ein in Förderrichtung nachgeschalteter Abscheider sein.

Ferner weist die Druckluftversorgungseinrichtung ein pneumatisch betätigbares Entlüftungsventil auf, dessen Steuereingang pneumatisch mit der Entlüftungssteuerleitung verbunden ist und mittels dem in Abhängigkeit vom Druck in der Entlüftungssteuerleitung eine Entlüftungsleitung mit einer Lüftung verbindbar oder gegen diese Entlüftung absperrbar ist. Im Betriebszustand "Förderung" wird das Entlüftungsventil über seinen Steueranschluss derart pneumatisch angesteuert, dass dieses Entlüftungsventil die Entlüftungsleitung gegen die Entlüftung absperrt. In diesem Fall können die Lufttrocknungsmittel zum Reinigen bzw. Entfeuchten der Druckluft im Förderbetrieb verwendet werden.

Im Betriebszustand "Regeneration" der Lufttrocknungseinrichtung werden die Lufttrocknungsmittel hingegen zum Spülen in einer der Förderrichtung entgegen gerichteten Regenerationsrichtung durchströmt. Dies wird dadurch veranlasst, dass das Entlüftungsventil über die Entlüftungssteuerleitung von der Druckluftsteuerungseinrichtung derart pneumatisch angesteuert wird, dass die Lufttrocknungsmittel durch die Entlüftungsleitung zur Entlüftung entlüftet werden. Hierdurch wird ein Spülen bzw. eine Regeneration der Lufttrocknungseinrichtung ermöglicht, wobei gesammelte Partikel bzw. Kondensat mit Druckluft entgegen der Förderrichtung zur Entlüftung ausgeblasen werden.

Die Druckluft zum Spülen der Lufttrocknungsmittel wird dabei vorzugsweise durch eine Spülluftversorgungsleitung zugeführt. Die Spülluftversorgungsleitung ist über einen Spülluftanschluss mit einer Verbindungsleitung und über diese Verbindungsleitung mit den Lufttrocknungsmitteln verbunden. Die Verbindungsleitung verbindet dabei die Lufttrocknungsmittel mit der Systemdruckleitung.

Um ein Entweichen von Druckluft aus der Systemdruckleitung bei der Regeneration zu verhindern bzw. diesem Entweichen entgegenzuwirken, ist ferner ein Rückschlagventil in der Verbindungsleitung zwischen dem Spülluftanschluss und der Systemdruckleitung vorgesehen. Das Rückschlagventil ist vorzugsweise Teil der Lufttrocknungseinrichtung, kann jedoch ggf. auch separat, der Lufttrocknungseinrichtung nachgeschaltet, in oder vor der Systemdruckleitung angeordnet sein.

In der Spülluftversorgungsleitung ist vorzugsweise eine Blende angeordnet, die einen Durchfluss von Druckluft begrenzt, so dass Spüldruckluft nicht schlagartig entweicht.

Die Spüldruckluft wird vorzugsweise entweder aus einem Druckluftvorratsbehälter bereitgestellt, der pneumatisch mit der Spüldruckleitung verbunden ist. In einer alternativen Ausführungsform ist die Spüldruckleitung pneumatisch mit der Entlüftungssteuerleitung bzw. mit einem Ausgang des Entlüftungssteuerventils verbunden, über den auch die Entlüftungssteuerleitung gespeist wird. Dieser Ausgang des Entlüftungssteuerventils bzw. die Entlüftungssteuerleitung sind in diesem Fall daher vorzugsweise mit Querschnitten bzw. Durchmessern ausgelegt, die in der Lage sind, die Druckluft zum Spülen zu liefern. Insbesondere ist ein Querschnitt der pneumatischen Leitung bzw. Komponenten bzw. des Entlüftungsventils von der Systemdruckleitung zum Spülluftanschluss vorgesehen, der nicht kleiner ist als ein Querschnitt bzw. Durchmesser der Blende in der Spüldruckleitung.

In einer alternativen Ausführung ist die Spüldruckleitung mit der Systemdruckleitung verbunden, wobei insbesondere die Lufttrocknungseinrichtung entsprechend ausgebildet ist. Dabei kann die Systemdruckleitung von der Spüldruckleitung durch ein pneumatisches Regenerationssteuerventil abgesperrt werden. In diesem Fall wird durch die Entlüftungssteuerleitung neben dem Entlüftungsventil auch das Regenerationssteuerventil geschaltet.

Schließlich löst die Erfindung die Aufgabe mit einem Fahrzeug, insbesondere Nutzfahrzeug, dass die erfindungsgemäße Druckluftversorgungseinrichtung und/oder die erfindungsgemäße elektronische Steuereinrichtung und/oder das erfindungsgemäße Druckluftversorgungssystem aufweist und/oder Mittel zur Durchführung des erfindungsgemäßen Druckluftsteuerungsverfahrens und/oder Mittel zur Durchführung des erfindungsgemäßen Druckluftversorgungsverfahrens aufweist, wobei das Fahrzeug ferner wenigstens eine Drucklufteinrichtung, bspw. eine Druckluftbremsanlage oder eine Druckluftfederung, aufweist, die über wenigstens einen Anschluss zur Systemdruckleitung mit Druckluft versorgt werden kann.

Weitere Ausführungsformen der Erfindung ergeben sich aus den Ansprüchen sowie aus den anhand der Zeichnung näher erläuterten Ausführungsbeispielen. In der Zeichnung zeigen:
- Fig. 1: ein Schaltbild mit einer Druckluftsteuerungseinrichtung gemäß einem ersten Ausführungsbeispiel der Erfindung;
- Fig. 2: ein Schaltbild mit der Druckluftsteuerungseinrichtung von Fig. 1 in anderer baulicher Aufteilung gemäß einem zweiten Ausführungsbeispiel der Erfindung;
- Fig. 3: ein Schaltbild mit der Druckluftsteuerungseinrichtung von Fig. 1 und einer anders ausgebildeten Lufttrocknungssteuerungseinrichtung gemäß einem dritten Ausführungsbeispiel der Erfindung;
- Fig. 4: ein Schaltbild mit einer Druckluftsteuerungseinrichtung und mit einer Lufttrocknungseinrichtung mit gleicher Funktion wie bei Fig. 3 gemäß einem vierten Ausführungsbeispiel der Erfindung;
- Fig. 5: ein Schaltbild mit einer Druckluftsteuerungseinrichtung mit gegenüber der Druckluftsteuerungseinrichtung von Fig. 1 geänderter Funktion gemäß einem fünften Ausführungsbeispiel der Erfindung;
- Fig. 6: ein Schaltbild mit einer Druckluftsteuerungseinrichtung gemäß Fig. 5 und einer Lufttrocknungseinrichtung gemäß Fig. 3 gemäß einem sechsten Ausführungsbeispiel der Erfindung;
- Fig. 7: ein Schaltbild mit einer Druckluftsteuerungseinrichtung und einer Lufttrocknungseinrichtung wie das Schaltbild gemäß Fig. 6, jedoch in anderer baulicher Aufteilung gemäß einem siebten Ausführungsbeispiel der Erfindung;
- Fig. 8: ein Schaltbild mit einer Druckluftsteuerungseinrichtung mit einer gegenüber der Druckluftsteuerungseinrichtung von Fig. 5 anderen Funktion gemäß einem achten Ausführungsbeispiel der Erfindung;
- Fig. 9: ein Schaltbild mit einer Druckluftsteuerungseinrichtung gemäß Fig. 8, jedoch in anderer baulicher Aufteilung gemäß einem neunten Ausführungsbeispiel der Erfindung und
- Fig. 10: ein Schaltbild mit der Druckluftsteuerungseinrichtung und der Lufttrocknungseinrichtung gemäß Fig. 1 in einer Variante mit einem zusätzlichen Ventil gemäß einem zehnten Ausführungsbeispiel der Erfindung.

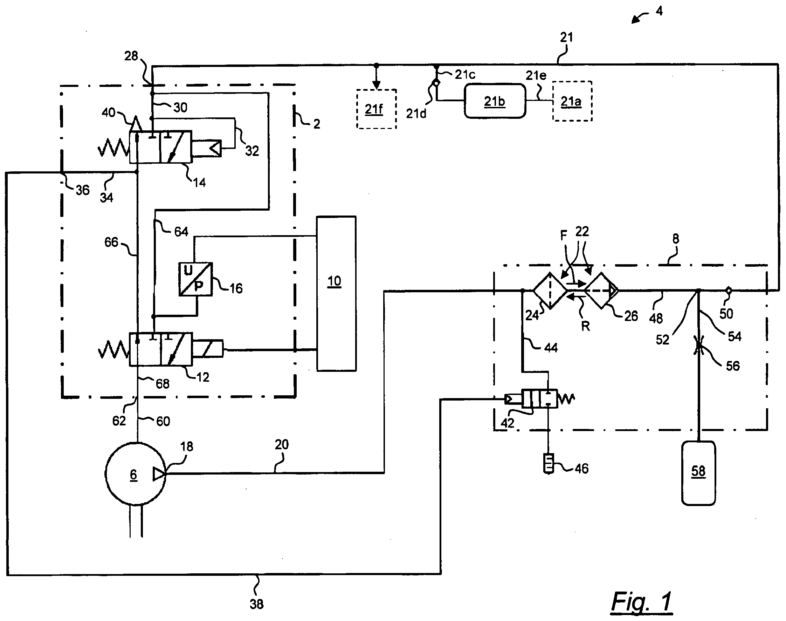

Fig. 1 zeigt ein Schaltbild mit einer erfindungsgemäßen Druckluftsteuerungseinrichtung 2, mittels der das erfindungsgemäße Druckluftsteuerungsverfahren ggf. mittels zusätzlicher Komponenten eines die Druckluftsteuerungseinrichtung 2 aufweisenden Druckluftversorgungssystems 4 durchgeführt werden kann. Dieses Druckluftversorgungssystem 4 weist zusätzlich einen Kompressor 6 und eine Lufttrocknungseinrichtung 8 auf.

Die Druckluftsteuerungseinrichtung 2 wird von einer elektronischen Steuereinrichtung 10 angesteuert. Insbesondere weist die Druckluftsteuerungseinrichtung 2 ein elektrisch betätigbares Zufuhrsteuerventil 12 auf, das von der elektronischen Steuereinrichtung 10 zum Schalten von einem unbestromten zu einem bestromten Schaltzustand elektrisch angesteuert werden kann. Ferner weist die Druckluftsteuerungseinrichtung 2 einen sog. Governor bzw. ein pneumatisch betätigbares Entlüftungssteuerventil 14 auf, das ebenfalls zwischen zwei Schaltzuständen, jedoch pneumatisch betätigt, wechseln kann. Schließlich weist die Druckluftsteuerungseinrichtung 2 noch einen Drucksensor 16 auf, der elektrische Signale gemäß sensierter Drücke an die elektronische Steuereinrichtung 10 sendet.

Die Steuereinrichtung 10 ist hier außerhalb der Druckluftsteuerungseinrichtung 2 dargestellt. Insbesondere kann die Druckluftsteuerungseinrichtung 10 in eine Motorsteuerelektronik zur Steuerung eines Motors, der auch den Kompressor 6 antreibt, integriert sein. Alternativ kann die elektronische Steuereinrichtung 10 auch als separates Modul ausgebildet oder bspw. in die Druckluftsteuerungseinrichtung 2 oder auch in die Lufttrocknungseinrichtung 8 integriert sein.

Der Kompressor 6 weist einen Ausgang 18 auf, über den er Druckluft bereitstellt. Diese Druckluft weist in der Regel Feuchtigkeit auf, die sich an Druckleitungen niederschlagen kann, insbesondere dann, wenn sich diese Druckluft, die zunächst vergleichsweise warm den Kompressor 6 verlässt, abkühlt. Daher ist der Kompressor 6 durch den Ausgang 18 und durch eine Druckluftleitung 20 zunächst mit der Lufttrocknungseinrichtung 8 und erst über diese Lufttrocknungseinrichtung 8 mit einer Systemdruckleitung 21 verbunden, die den vom Kompressor 6 erzeugten Systemdruck führt. Die Systemdruckleitung 21 stellt den Systemdruck symbolisch angedeuteten Drucklufteinrichtungen 21a eines die Druckluftsteuerungseinrichtung 2 aufweisenden Fahrzeugs vorzugsweise über wenigstens einen Druckluftvorratsbehälter 21b bereit. Derartige Drucklufteinrichtungen 21a können pneumatische Systeme des Fahrzeugs wie eine druckluftbetriebene Bremsanlage und/oder eine Luftfederungsanlage sein. Ein ggf. dem Druckluftvorratsbehälter 21b in einer Druckluftleitung 21c vorgeschaltetes Rückschlagventil 21d wirkt einem Rückströmen von Druckluft aus dem Druckluftvorratsbehälter 21b in die Systemdruckleitung 21 entgegen, so dass die Drucklufteinrichtungen über eine Druckluftleitung 21e auch dann noch eine Zeit lang mit Druckluft aus dem Druckluftvorratsbehälter 21b versorgt werden können, wenn der Systemdruck in der Systemdruckleitung 21 aufgrund eines Defekts abfallen sollte. Insbesondere für die Versorgung von Bremseinrichtungen kann ferner ein nicht dargestelltes Mehrkreisschutzventil vorgesehen sein. Alternativ oder zusätzlich zu den Einrichtungen 21a bis 21e können Verbraucher 21f vorgesehen sein, die über die Systemleitung 21 mit Druckluft versorgt werden.

Die Lufttrocknungseinrichtung 8 weist zur Lufttrocknung Lufttrocknungsmittel 22 auf. Diese Lufttrocknungsmittel 22 sind im gezeigten Ausführungsbeispiel ein Filter 24 und ein dem Filter 24 nachgeschalteter Abscheider 26. Alternativ können jedoch auch andere Lufttrocknungsmittel 22 vorgesehen sein, welche die vom Kompressor 6 bereitgestellte Druckluft von Kondensat und/oder Partikel bzw. Flüssigkeit befreien oder zumindest Teile davon herausfiltern bzw. abscheiden, wenn sie in einer Förderrichtung F durchströmt werden.

Der in der Systemdruckleitung 21 vorliegende Systemdruck wird der Druckluftsteuerungseinrichtung 2 zugeführt. Hierfür weist die Druckluftsteuerungseinrichtung 2 einen mit der Systemdruckleitung 21 pneumatisch verbundenen Systemdruckeingang 28 auf. Der Systemdruck wird durch eine Druckluftleitung 30 dem Entlüftungssteuerventil 14 zugeführt. Zudem wird dieser Systemdruck durch eine Steuerleitung 32 einem Steuereingang des Entlüftungssteuerventils 14 zugeführt. Das Entlüftungssteuerventil 14 sperrt bei einem Systemdruck, der unter einem bestimmten Wert liegt, mit der Kraft einer Feder die Druckluftleitung 30 gegenüber einer Druckluftleitung 34 bzw. dem Systemdruck 28 gegenüber einen Entlüftungssteuerausgang 36 und einer zur Lufttrocknungseinrichtung 8 führenden Entlüftungssteuerleitung 38 ab. Die Entlüftungssteuerleitung 38 ist bzw. wird in dieser Schaltstellung des Entlüftungssteuerventils 14 zu einem Entlüftungsausgang 40 entlüftet.

Die Entlüftungssteuerleitung 38 ist mit einem Steuereingang der Lufttrocknungseinrichtung 8 bzw. eines Entlüftungsventils 42 bzw. eines sog. "PURGE"-Ventils pneumatisch verbunden, so dass dieses Entlüftungsventil 42 und damit ein Betriebszustand der Lufttrocknungseinrichtung 8 mittels des Entlüftungssteuerventils 14 geschaltet werden kann. Bei entlüfteter Entlüftungssteuerleitung 38 bzw. wenn der Druck am Steuereingang des Entlüftungsventils 42 unter einem vorbestimmten Grenzwert liegt, sperrt das Entlüftungsventil 42 mittels der Kraft einer Feder eine Entlüftungsleitung 44, die pneumatisch mit der Druckluftleitung 20 verbunden ist, gegenüber einer Entlüftung 46, die durch einen der Entlüftung 46 vorgeschalteten Schalldämpfer angedeutet ist, ab. Die Lufttrocknungseinrichtung 8 befindet sich im Betriebszustand "Förderung".

Wenn der Systemdruck in der Systemdruckleitung 21 auf einen Grenzwert ansteigt, der zum Schalten des Entlüftungssteuerventils 14 gegen die Kraft einer Feder dieses Entlüftungssteuerventils 14 ausreicht, wechselt das Entlüftungssteuerventil 14 von einem ersten in einen zweiten Schaltzustand, in welchem die Entlüftungssteuerleitung 38 nicht mehr mit dem Entlüftungsausgang 40 sondern über die Druckluftleitung 30 mit dem Systemdruckeingang 28 pneumatisch verbunden ist. Dies führt dazu, dass sich in der Entlüftungssteuerleitung 38 ebenfalls der Systemdruck einstellt und in Erwiderung darauf das Entlüftungsventil 42 der Lufttrocknungseinrichtung 8 ebenfalls gegen die Kraft seiner Feder in einen anderen Schaltzustand umschaltet, in welchem die Entlüftungsleitung 44 pneumatisch mit der Entlüftung 46 verbunden ist. Die Lufttrocknungseinrichtung 8 befindet sich nun im Betriebszustand "Regeneration".

Die Lufttrocknungsmittel 22 sind durch eine Verbindungsleitung 48, in der ein Rückschlagventil 50 angeordnet ist, mit der Systemdruckleitung 21 verbunden. Dieses Rückschlagventil 50 wirkt einem Entlüften der Systemdruckleitung 21 durch das Entlüftungsventil 42 entgegen.

Spülluft wird stattdessen über einen Spülluftanschluss bzw. Spüllufteingang 52 bezogen, der zwischen dem Lufttrocknungsmittel 22 und dem Rückschlagventil 50 in der Verbindungsleitung 48 angeordnet ist. An den Spüllufteingang 52 ist eine Spülluftversorgungsleitung bzw. Spülluftleitung 54 mit einer Blende 56 angeschlossen. Spülluft wird in diesem Ausführungsbeispiel aus einem Druckluftvorratsbehälter 58 bezogen, der an die Spülluftleitung 54 angeschlossen ist und, durch die Blende 56 gedrosselt, das Lufttrocknungsmittel 22 in einer Regenerationsrichtung R durchströmend, durch das Entlüftungssteuerventil 42 entlüftet werden kann. Im Betriebszustand "Förderung" der Lufttrocknungseinrichtung 8 wird der Druckluftvorratsbehälter 58 regelmäßig wieder gefüllt.

Während der Regeneration bzw. Spülung der Lufttrocknungseinrichtung 8 liefert der Kompressor 6 keine Druckluft nach, was selbst bei einem Ausfall der Ansteuerung des Zufuhrsteuerventils 12 der Fall ist. Wenn nämlich in der Entlüftungssteuerleitung 38 der Systemdruck anliegt, so liegt dieser Systemdruck in diesem Ausführungsbeispiel immer auch in einer Kompressorsteuerleitung 60 vor, die einen Kompressorsteuerausgang 62 pneumatisch mit einem Steuereingang des Kompressors 6 verbindet. Der Steuerdruck in dieser Kompressorsteuerleitung 60 bestimmt, ob der Kompressor 6 sich in einem Betriebszustand "Warten" oder einem Betriebszustand "Fördern" befindet. Wenn dieser Steuerdruck in der Kompressorsteuerleitung 60 einen bestimmten Grenzwert erreicht oder übersteigt schaltet der Kompressor 6 in seinen Betriebszustand "Warten", so dass der Druck in der Druckluftleitung 20 nicht weiter erhöht wird.

Dem Zufuhrsteuerventil 12 wird der Systemdruck über eine Druckluftleitung 64 zugeführt. Dieser Systemdruck wird von einem mit der Druckluftleitung 64 in Verbindung stehenden Drucksensor 16 gemessen. Wenn sich das Entlüftungssteuerventil 14 zum Schalten der Lufttrocknungseinrichtung in den Betriebszustand "Regeneration" in seinem zweiten Schaltzustand befindet und somit in der Druckluftleitung 34 der Systemdruck anliegt, so liegt dieser Systemdruck auch in einer Druckluftleitung 66 an, der den Ausgang des Entlüftungssteuerventils 14 mit einem weiteren Eingang des Zufuhrsteuerventils 12 pneumatisch verbindet. Daher liegt in diesem Fall sowohl in der Druckluftleitung 64 als auch in der Druckluftleitung 66 der Systemdruck an, so dass unabhängig davon, in welcher Schaltstellung sich das Zufuhrsteuerventil 12 befindet, der Systemdruck über eine Druckluftleitung 68 von einem Ausgang des Zufuhrsteuerventils 12 zum Kompressorsteuerausgang 62 geführt wird. Daher ist die Förderung durch den Kompressor 6 unterbunden, wenn sich die Lufttrocknungseinrichtung 8 im Regenerationsbetrieb befindet bzw. gespült wird.

Mittels des Drucksensors 16 und der elektronischen Steuereinrichtung 10 kann ermittelt werden, dass der Steuerdruck steigt und einen Grenzwert erreicht, der noch nicht zum Schalten des Entlüftungssteuerventils 14 ausreicht. Wenn die elektronische Steuereinrichtung in diesem Fall entscheidet, dass aktuell keine Regeneration der Lufttrocknungseinrichtung 8 durchgeführt werden soll und kein aktueller Druckbedarf in der Systemdruckleitung 21 besteht, steuert sie das Zufuhrsteuerventil 12 elektrisch an, so dass dieses die Druckluftleitung 64 mit der Druckluftleitung 68 verbindet bzw. den Systemdruck zum Steuereingang des Kompressors 6 führt, obgleich die Entlüftungssteuerleitung 38 zur Lufttrocknungseinrichtung 8 noch entlüftet ist. Folglich wird der Förderbetrieb des Kompressors 6 abgestellt, so dass sich der Systemdruck nicht weiter erhöht und zugleich Energie gespart wird. Die Lufttrocknungseinrichtung 8 schaltet nicht in den Regenerationsbetrieb um, da der hierzu erforderliche Systemdruck nicht erreicht wird. Im Falle eines Mittels des Drucksensors 16 sensierten Druckabfalls kann der Kompressor 6 wieder in seinen Förderbetrieb geschaltet werden, wobei zeitnah der Systemdruck in der Systemdruckleitung 21 ansteigt, da dieser auch noch in der Druckluftleitung 20, in der Lufttrocknungseinrichtung 8 und im Druckluftvorratsbehälter 58 vorliegt.

Wenn ein Betrieb des Motors ohne Zufuhr von Kraftstoff bzw. eine Motorlast von Null sensiert bzw. als Signal empfangen wird, wird dies als Schubphase erkannt. Auch in Erwiderung auf diese erkannte Schubphase schaltet die Steuereinrichtung 10 das Zufuhrsteuerventil 12 in seine erste Schaltstellung, so dass die Kompressorsteuerleitung 60 belüftet und der Kompressor 6 in den Förderbetrieb versetzt wird. Auf diese Weise kann die am Motor zur Verfügung stehende Energie effizient für die Druckversorgung genutzt werden.

Nach einer Regeneration der Lufttrocknungseinrichtung 8 muss hingegen zunächst Druck in der Druckluftleitung 20, in der Verbindungsleitung 48 bis zum Rückschlagventil 50 und in dem Druckluftvorratsbehälter 58 aufgebaut werden, bevor das Rückschlagventil 50 Druckluft zur Systemdruckleitung passieren lässt.

Die Druckluftsteuerungseinrichtung 2 ist in diesem Ausführungsbeispiel als eine bauliche Gesamteinheit ausgeführt. Insbesondere sind das Zufuhrsteuerventil 12 und das Entlüftungssteuerventil 14 in einem gemeinsamen Gehäuse untergebracht. Dieses Gehäuse ist an ein Gehäuse des Kompressors 6 angeflanscht. Bspw. sind die Gehäuse miteinander verschraubt, wobei sie im Bereich des Kompressorsteuerausgangs 62 pneumatisch miteinander verbunden sind. Insbesondere kann eine Verbindung vom Kompressorsteuerausgang 62, bspw. abgedichtet durch einen Dichtungsring, zum Steuereingang des Kompressors 6 bzw. zur Kompressorsteuerleitung 60 bestehen.

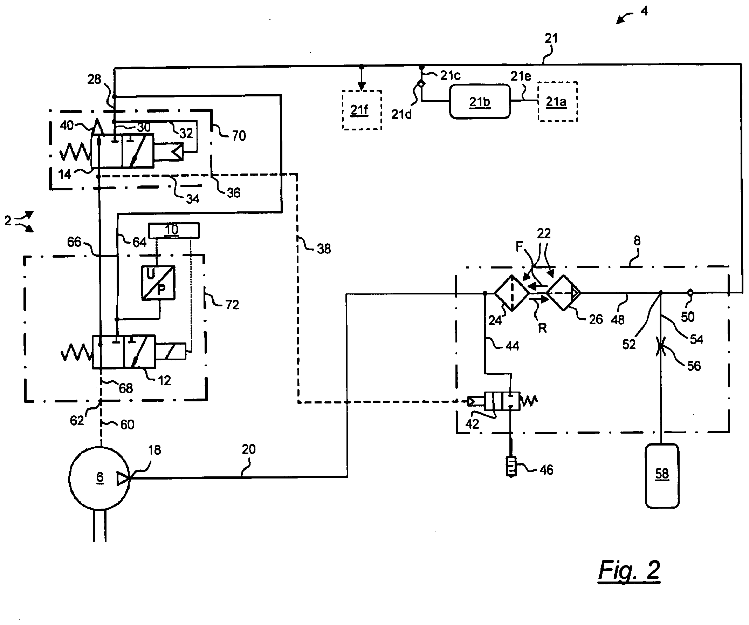

Fig. 2 zeigt ein Schaltbild mit der Druckluftsteuerungseinrichtung von Fig. 1, die jedoch baulich anders aufgeteilt ist. Insbesondere ist die Druckluftsteuerungseinrichtung 2 in diesem zweiten Ausführungsbeispiel nichts als bauliche Gesamteinheit ausgeführt, sondern weist eine erste bauliche Einheit 70 mit dem Entlüftungssteuerventil 14 und eine zweite bauliche Einheit 72 mit dem Zufuhrsteuerventil 12 auf. Diese Einheiten 70 und 72 sind vorzugsweise dennoch in räumlicher Nähe zueinander angeordnet, ganz besonders bevorzugt sogar einander angeflanscht, so dass die Druckluftleitungen 66 über eine Flanschverbindung von der ersten Einheit 70 zur zweiten Einheit 72 geführt wird. Die Druckluftleitung 64 ist hier direkt mit der Systemdruckleitung 21 verbunden, kann alternativ jedoch ebenfalls, insbesondere über eine Flanschverbindung, in die erste Einheit 70 münden und dort mit einer den Systemdruck führenden Druckluftleitung verbunden sein. Ansonsten gleicht dieses zweite Ausführungsbeispiel dem ersten Ausführungsbeispiel. Insbesondere bezeichnen gleiche Bezugsziffern gleiche oder zumindest funktionell gleiche Bauteile. Auch in allen anderen Ausführungsbeispielen bezeichnen gleiche Bezugsziffern gleiche oder zumindest funktionell gleiche Bauteile.

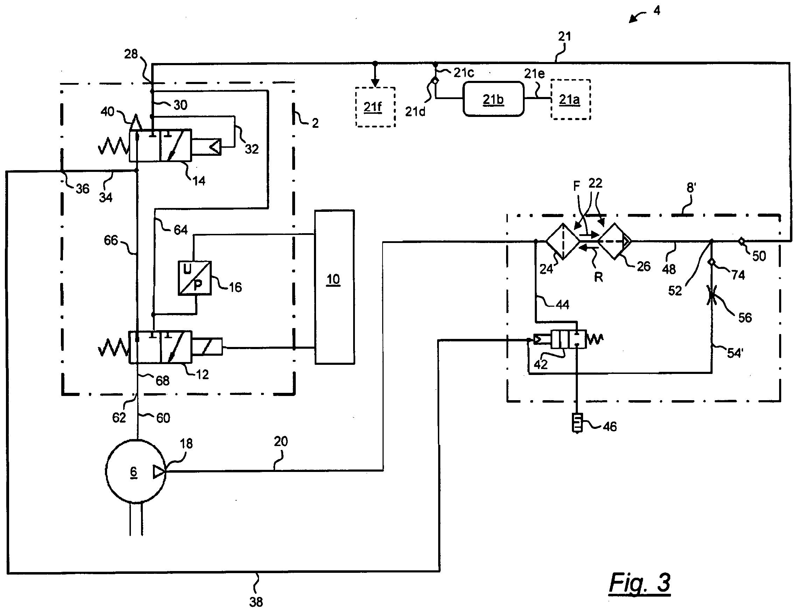

Fig. 3 zeigt ein Schaltbild mit der Druckluftsteuerungseinrichtung von Fig. 1, jedoch mit einer gegenüber der Lufttrocknungseinrichtung 8 von Fig. 1 andersartig ausgebildeten Lufttrocknungseinrichtung 8'. Insbesondere ist anstelle der zum Druckluftvorratsbehälter 58 geführten Spülluftleitung 54 eine Spülluftleitung 54' vorgesehen, die den Spüllufteingang 52 über ein zusätzliches Rückschlagventil 74 und die Blende 56 mit der Entlüftungssteuerleitung 38 verbindet. Die Entlüftungssteuerleitung 38 und Anschlüsse, insbesondere der Ausgang, des Entlüftungssteuerventils 14 sind deshalb gegenüber dem Ausführungsbeispiel von Fig. 1 vorzugsweise entsprechend größer dimensioniert, so dass eine ausreichend große Luftmenge pro Zeiteinheit zum Spülen der Lufttrocknungseinrichtung 8' bzw. der Lufttrocknungsmittel 22 bereitgestellt werden kann.

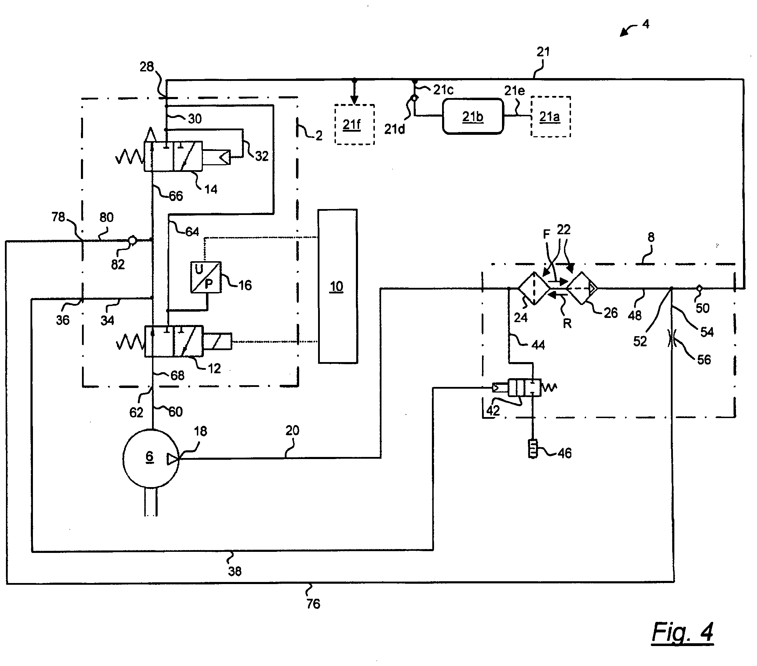

Fig. 4 zeigt ein Schaltbild einer Druckluftsteuerungseinrichtung gemäß einem vierten Ausführungsbeispiel der Erfindung, welches in seiner Funktion dem Ausführungsbeispiel von Fig. 3 gleicht. Baulich ist in diesem vierten Ausführungsbeispiel allerdings die Lufttrocknungseinrichtung 8 des ersten Ausführungsbeispiels von Fig. 1 vorgesehen. Allerdings ist die Spülluftleitung 54 nicht mit einem Druckluftvorratsbehälter 58 verbunden, sondern wird über eine Druckluftleitung 76 zu einem Ausgang 78 einer Druckluftsteuerungseinrichtung 2' geführt. Die Druckluftleitung 66 ist über eine Druckluftleitung 80, die ein Rückschlagventil 82 aufweist, mit dem Ausgang 78 pneumatisch verbunden. Das Rückschlagventil 82 erfüllt dieselbe Funktion wie das Rückschlagventil 74 von Fig. 3, wirkt nämlich einem Abführen von Druckluft ausgehend vom Spüllufteingang 52 durch die Spülluftleitung 54 bzw. 54' entgegen.

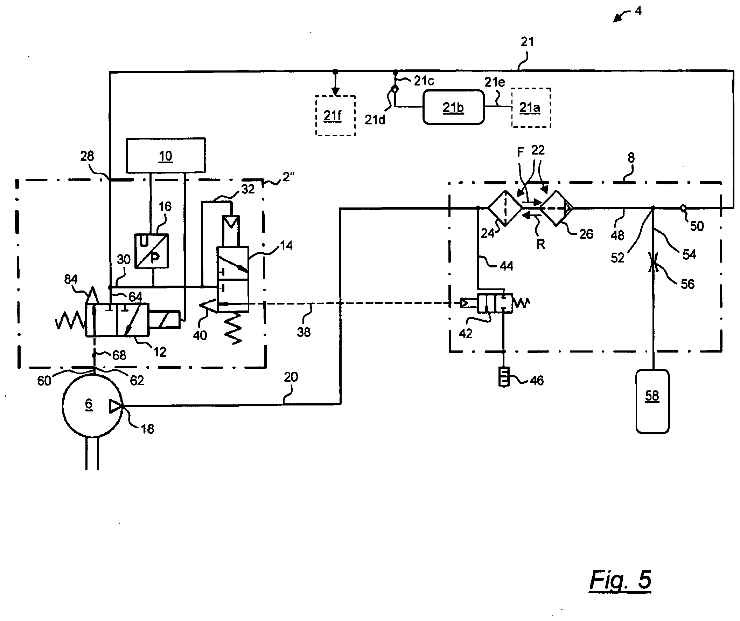

Fig. 5 zeigt ein Schaltbild einer Druckluftsteuerungseinrichtung 2" gemäß einem fünften Ausführungsbeispiel der Erfindung, wobei diese Druckluftsteuerungseinrichtung 2" gegenüber der Druckluftsteuerungseinrichtung 2 von Fig. 1 eine geänderte Funktionalität aufweist. Insbesondere verbindet das Zufuhrsteuerventil 12 im unbestromten Zustand den Steuereingang des Kompressors 6 nicht wie beim ersten Ausführungsbeispiel mit der Druckluftleitung 66 bzw. mit dem Entlüftungssteuerausgang 36, sondern mit einer Entlüftung 84, so dass der Kompressor 6 unabhängig von einer Schaltstellung des Entlüftungssteuerventils 14 und unabhängig vom Systemdruck durch Entlüftung der Kompressorsteuerleitung 60 zu dieser Entlüftung 84 entlüftet werden kann. Auch im Falle eines Ausfalls der Steuereinrichtung 10 findet eine Entlüftung statt, so dass der Kompressor 6 dauerhaft fördert.

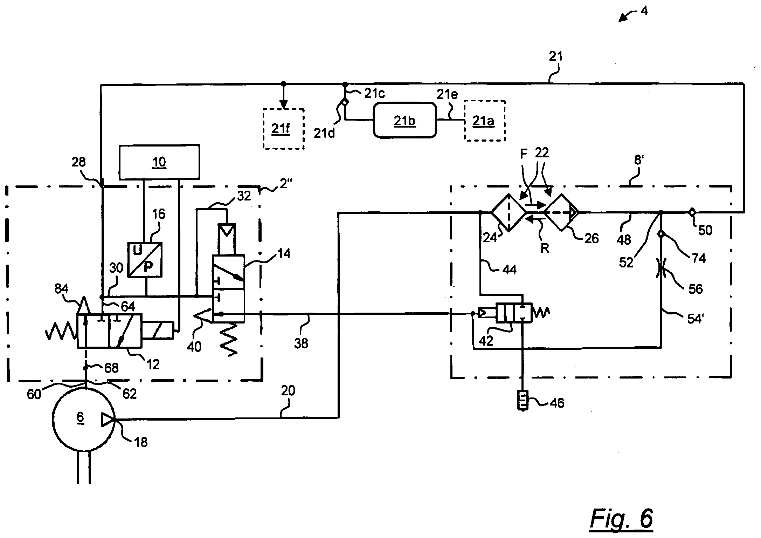

Fig. 6 zeigt ein Schaltbild mit der Druckluftsteuereinrichtung 2" von Fig. 5, welche mit der Lufttrocknungseinrichtung 8' gemäß Fig. 3 zusammenwirkt.

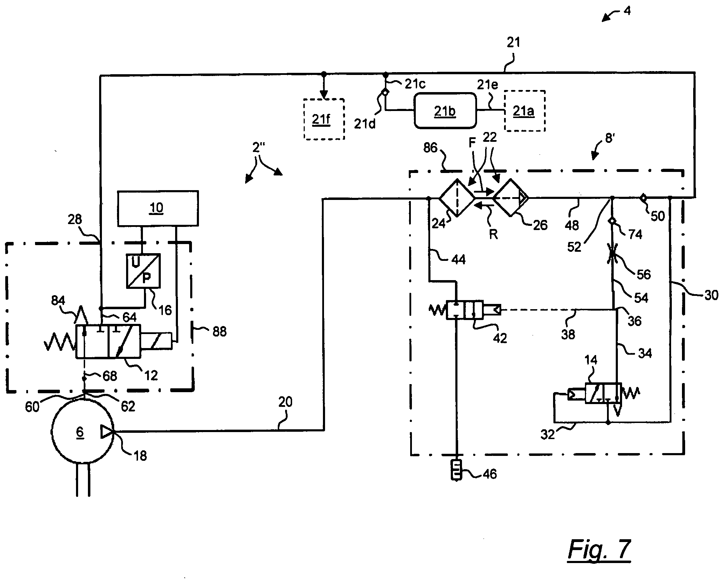

Fig. 7 zeigt die Steuereinrichtung 2" und die Lufttrocknungseinrichtung 8' von Fig. 6 in anderer baulicher Aufteilung. Insbesondere ist eine erste bauliche Einheit mit dem Entlüftungssteuerventil 14 baulich mit der Lufttrocknungseinrichtung 8' gemäß Fig. 6 in einer Einheit 86 integriert. Auch der Entlüftungssteuerausgang 36, die Entlüftungssteuerleitung 38 und der Steuereingang der Lufttrocknungseinrichtung 8' sind in die Einheit 86 integriert und können zusammen als eine Druckluftleitung ausgeführt sein. Das Zufuhrsteuerventil 12 ist hingegen separat in einer weiteren baulichen Einheit 88 angeordnet, die an den Kompressor 6 angeflanscht ist.

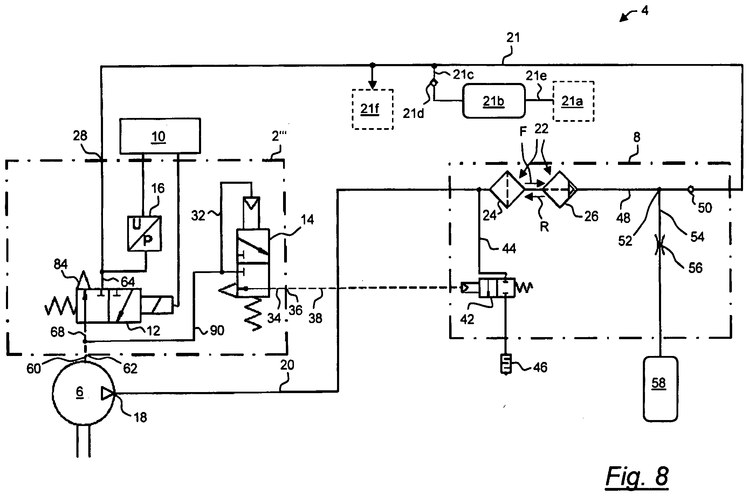

Fig. 8 zeigt ein Schaltbild mit einer Druckluftsteuerungseinrichtung 2'" gemäß einem achten Ausführungsbeispiel der Erfindung in Verbindung der Lufttrocknungseinrichtung 8 von Fig. 1 bzw. Fig. 5. Die Druckluftsteuerungseinrichtung 2'" unterscheidet sich insbesondere dadurch von der Druckluftsteuerungseinrichtung 2" gemäß Fig. 5, dass das Entlüftungssteuerventil 14 nicht über die Druckluftleitung 30 mit dem Systemdruckeingang 28 verbunden ist, sondern eine pneumatische Verbindung vom Eingang und vom Steuereingang des Entlüftungssteuerventils 14 über eine Druckluftleitung 90 zum Ausgang des Zufuhrsteuerventils 12 bzw. zur Druckluftleitung 68 und zum Kompressorsteuerausgang 62 besteht. Das Entlüftungssteuerventil 14 ist in diesem Ausführungsbeispiel daher dem Zufuhrsteuerventil 12 nachgeschaltet. Folglich erreicht ein Druck in der Entlüftungssteuerleitung 38 maximal den Druck in der Kompressorsteuerleitung 60 bzw. am Eingang des Kompressors 6. Dies hat zur Folge, dass die Lufttrocknungseinrichtung 8 nur dann in den Betriebszustand "Regeneration" überführt werden kann, wenn der Kompressor 6 nicht fördert bzw. sich im Betriebszustand "Warten" befindet.

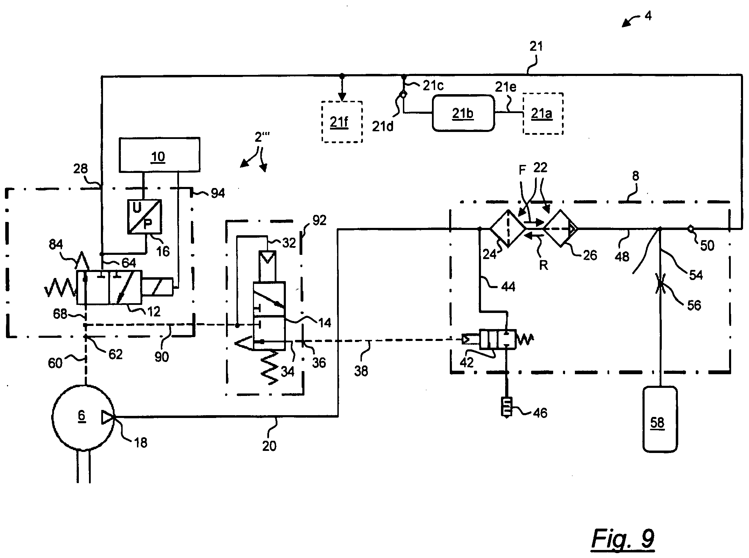

Fig. 9 zeigt ein Schaltbild mit der Druckluftsteuerungseinrichtung 2'" von Fig. 8 und der Lufttrocknungseinrichtung 8, welches funktional dem achten Ausführungsbeispiel gemäß Fig. 8 gleicht. Im Unterschied zu Fig. 8 ist die Druckluftsteuerungseinrichtung 2'" in diesem neunten Ausführungsbeispiel jedoch baulich aufgeteilt. Insbesondere ist das Entlüftungssteuerventil 14 in einer ersten baulichen Einheit 92 und das Zufuhrsteuerventil 12 in einer zweiten baulichen Einheit 94 angeordnet. Beide baulichen Einheiten 92 und 94 können mechanisch miteinander verbunden, insbesondere aneinander angeflanscht sein.

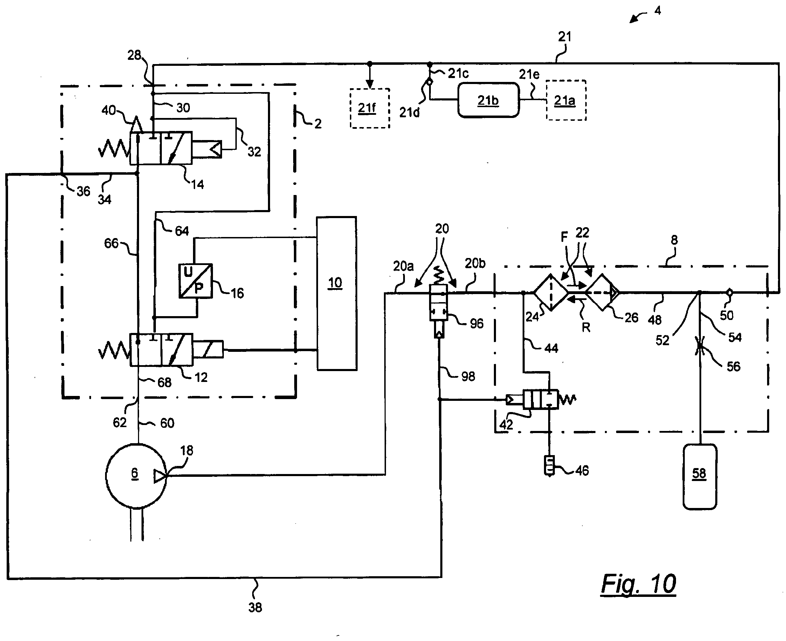

Fig. 10 zeigt ein Schaltbild mit der Druckluftsteuerungseinrichtung 2 von Fig. 1 und der Lufttrocknungseinrichtung 8, welches sich insbesondere durch ein zusätzliches pneumatisch betätigbares Belüftungsventil 96 vom Ausführungsbeispiel gemäß Fig. 1 unterscheidet. Dieses Belüftungsventil 96 ist in der Druckluftleitung 20 zwischen dem Kompressor 6 und der Lufttrocknungseinrichtung 8 angeordnet, wobei mittels dieses Belüftungsventils 96 ein am Kompressor 6 angeschlossener Teil der Druckluftleitung 20 bzw. eine Druckluftleitung 20a von einem an der Lufttrocknungseinrichtung 8 angeschlossenen Teil der Druckluftleitung 20 bzw. von einer Druckluftleitung 20b pneumatisch abgetrennt werden kann. Dies hat den Vorteil, dass die Druckluft aus der Leitung zwischen Kompressor 6 und Lufttrocknungseinrichtung 8 während der Regeneration unter Druck gehalten werden kann. Insbesondere wird verhindert, dass bei einem Kompressor 8, der seine Luft nicht aus der Umgebung ansaugt, sondern der von einem Turbolader gespeist wird, die Druckluft des Turboladers über den Kompressor 8 und Druckluftleitung 20 und das geöffnete Entlüftungsventil 42 in die Atmosphäre entweicht. Somit steht die volle Druckluft des Turboladers einem Verbrennungsmotor ohne Druckverluste in der Luftaufbereitungsanlage zur Verfügung.

Das Belüftungsventil 96 kann im Wesentlichen wie das Entlüftungsventil 42, jedoch mit vertauschten Schaltzuständen ausgebildet sein. Schaltdrücke, die zum Schalten des jeweiligen Ventils 42 bzw. 96 gegen die Kraft der jeweiligen Feder dieses Ventils 42 bzw. 96 aufgebracht werden müssen, sind bevorzugt gleich, können alternativ jedoch auch unterschiedlich sein.

Der Steuereingang des Belüftungsventils 96 ist über eine Belüftungssteuerleitung 98 mit der Entlüftungssteuerleitung 38 pneumatisch verbunden. Das Belüftungsventil 96 kann daher vom Entlüftungssteuerventil 14 gesteuert werden. Wenn die Entlüftungssteuerleitung 38 und die Belüftungssteuerleitung 98 entlüftet sind, sind die Druckluftleitungen 20a und 20b mittels des Belüftungsventils 96 pneumatisch miteinander verbunden. Sobald jedoch der Druck in der Entlüftungssteuerleitung 38 und der Belüftungssteuerleitung 98 bzw. am Steuereingang des Belüftungsventils 96 einen oberen Grenzwert erreicht oder überschreitet, der insbesondere durch die Feder des Belüftungsventils 96 festgelegt ist, schaltet das Belüftungsventil 96 vom ersten in seinen zweiten Schaltzustand, in welchem die Druckluftleitung 20a von der Druckluftleitung 20b abgesperrt ist.

In dem Fall, dass das Entlüftungsventil 42 und das Belüftungsventil 96 gleiche Grenzwerte aufweisen, bei denen sie schalten, bzw. bei gleichen Steuerdrücken in ihren jeweils anderen Schaltzustand umschalten, sind die Lufttrocknungsmittel 22 zu einer Zeit somit immer entweder durch die Druckluftleitung 20 mit dem Kompressor 6 oder durch die Entlüftungsleitung 44 mit der Entlüftung 46, nie jedoch zugleich mit dem Kompressor 6 und der Entlüftung 46 pneumatisch verbunden, so dass der Kompressor Druckluft nicht direkt bzw. unter Umgehung der Lufttrocknungsmittel 22 zur Entlüftung 46 befördert.

Alternativ zum gezeigten Ausführungsbeispiel kann das Belüftungsventil 96 auch in die Lufttrocknungseinrichtung 8 integriert und/oder das Entlüftungsventil 42 außerhalb der Lufttrocknungseinrichtung 8 angeordnet sein. Insbesondere dann, wenn gleiche Schaltdrücke für das Entlüftungsventil 42 und das Belüftungsventil 96 vorgesehen sein sollen, kann anstelle der Kombination aus dem Entlüftungsventil 42 und dem Belüftungsventil 96 ein einziges Ventil vorgesehen sein, das einen Eingang der Lufttrocknungsmittel 22 in Förderrichtung F bzw. die Entlüftungsleitung 44 in Abhängigkeit seines Schaltzustand entweder mit der Druckluftleitung 20 bzw. dem Kompressor 6 oder mit der Entlüftung 46 pneumatisch verbindet. Dieses Ventil kann ein 3/2-Wege-Ventil sein bzw., insbesondere abgesehen vom notwendigen Schaltdruck, gleich oder ähnlich ausgebildet sein, wie das Entlüftungssteuerventil 14. Ein derartiges Be- und Entlüftungsventil, das anstelle der Ventile 42 und 96 vorgesehen wird, kann wahlweise außerhalb der Lufttrocknungseinrichtung 8 angeordnet sein, ist jedoch vorteilhafterweise in die Lufttrocknungseinrichtung 8 integriert.

Alle in der vorstehenden Beschreibung und den Ansprüchen genannten Merkmale sind sowohl einzeln als auch in beliebiger Kombination miteinander einsetzbar. Die Offenbarung der Erfindung ist somit nicht auf die beschriebenen bzw. beanspruchten Merkmalskombinationen beschränkt. Vielmehr sind alle Merkmalskombinationen als offenbart zu betrachten.

## Patentansprüche

1. Druckluftsteuerungseinrichtung (2) zur Steuerung jeweiliger Betriebszustände eines Kompressors (6) und einer Lufttrocknungseinrichtung (8),
- wobei die Druckluftsteuerungseinrichtung (2) einen Kompressorsteuerausgang (62) aufweist, über den sie zum pneumatischen Schalten des Betriebszustands des Kompressors (6) pneumatisch mit einem Steuereingang des Kompressors (6) verbindbar ist,
- wobei die Druckluftsteuerungseinrichtung (2) einen Systemdruckeingang (28) aufweist, über den sie pneumatisch mit einer Systemdruckleitung (21), die einen vom Kompressor (6) erzeugten Systemdruck führt, verbindbar ist,
- wobei die Druckluftsteuerungseinrichtung (2) einen Entlüftungssteuerausgang aufweist, über den sie zum pneumatischen Schalten des Betriebszustands der Lufttrocknungseinrichtung (8) pneumatisch mit einem Steuereingang der Lufttrocknungseinrichtung (8) verbindbar ist,
- und wobei die Druckluftsteuerungseinrichtung (2) ein, pneumatisch betätigbares, Entlüftungssteuerventil (14) aufweist, mittels dem zum Schalten des Betriebszustands der Lufttrocknungseinrichtung (8) der Systemdruckeingang (28) in Abhängigkeit vom Systemdruck pneumatisch mit dem Entlüftungssteuerausgang (36) verbindbar ist,
mit
einem elektrisch betätigbaren Zufuhrsteuerventil (12), mittels dem zum Schalten des Betriebszustands des Kompressors (6) der Systemdruckeingang (28) unabhängig vom Systemdruck pneumatisch mit dem Kompressorsteuerausgang (62) verbindbar ist,
**dadurch gekennzeichnet, dass**
das Zufuhrsteuerventil (12) zwei Schaltzustände aufweist, wobei der Kompressorsteuerausgang (62), jeweils unabhängig vom Systemdruck, in einem ersten Schaltzustand mit dem Entlüftungssteuerausgang (36) oder mit einer Entlüftung (84) und in einem zweiten Schaltzustand mit dem Systemdruckeingang (28) pneumatisch verbunden ist.

2. Druckluftsteuerungseinrichtung nach Anspruch 1,
**gekennzeichnet durch**
einen Drucksensor (16), der mit dem Systemdruckeingang (28) pneumatisch verbunden ist.

3. Druckluftsteuerungseinrichtung nach einem der Ansprüche 1 oder 2,
**dadurch gekennzeichnet, dass**
die Druckluftsteuerungseinrichtung (2) als bauliche Gesamteinheit ausgebildet ist oder eine erste bauliche Einheit (70) mit dem Entlüftungssteuerventil (14) und eine mit der ersten Einheit mechanisch und pneumatisch verbindbare zweite bauliche Einheit (72) mit dem Zufuhrsteuerventil (12) aufweist, wobei die Druckluftsteuerungseinrichtung (2), insbesondere die Einheit (72) mit dem Zufuhrsteuerventil (12), derart ausgebildet ist, dass sie an den Kompressor (6) anflanschbar ist.

4. Druckluftsteuerungsverfahren, insbesondere zur Druckluftsteuerung mittels einer Druckluftsteuerungseinrichtung (2) nach einem der Ansprüche 1 bis 3, mit dem jeweilige Betriebszustände eines Kompressors (6) und einer Lufttrocknungseinrichtung (8) gesteuert werden,
- wobei die Druckluftsteuerungseinrichtung (2) über einen Kompressorsteuerausgang (62), der mit einem Steuereingang des Kompressors (6) verbunden ist, den Betriebszustand des Kompressors (6) pneumatisch schaltet,
- wobei die Druckluftsteuerungseinrichtung (2) über einen Systemdruckeingang (28) Druckluft mit einem vom Kompressor (6) erzeugten Systemdruck aus einer Systemdruckleitung (21) bezieht,
- wobei die Druckluftsteuerungseinrichtung (2) über einen Entlüftungssteuerausgang (36), der mit einem Steuereingang der Lufttrocknungseinrichtung pneumatisch verbunden ist, den Betriebszustand der Lufttrocknungseinrichtung (8) pneumatisch schaltet und
- wobei ein pneumatisch betätigbares Entlüftungssteuerventil (14) der Druckluftsteuerungseinrichtung (2) den Betriebszustand der Lufttrocknungseinrichtung (8) dadurch schaltet, dass es den Systemdruckeingang (28) in Abhängigkeit vom Systemdruck pneumatisch mit dem Entlüftungssteuerausgang (36) verbindbar macht oder verbindet,
**dadurch gekennzeichnet, dass**
ein elektrisch betätigbares Zufuhrsteuerventil (12) der Druckluftsteuerungseinrichtung (2) den Betriebszustand des Kompressors (6) dadurch schaltet, dass es den Systemdruckeingang (28) unabhängig vom Systemdruck pneumatisch mit dem Kompressorsteuerausgang (62) verbindet oder gegen eine vom Systemdruck unabhängige Verbindung zum Systemdruckeingang (28) absperrt.

5. Druckluftsteuerungsverfahren nach Anspruch 4,
**dadurch gekennzeichnet, dass**
das Zufuhrsteuerventil (12) zwei Schaltzustände aufweist, wobei das Zufuhrsteuerventil (12), insbesondere jeweils unabhängig vom Systemdruck, im Falle eines ersten Schaltzustands den Kompressorsteuerausgang (62) mit dem Entlüftungssteuerausgang (36) oder mit einer Entlüftung (84) und im Falle eines zweiten Schaltzustands mit dem Systemdruckeingang (28) pneumatisch verbindet.

6. Druckluftsteuerungsverfahren nach Anspruch 4 oder 5,
**dadurch gekennzeichnet, dass**
ein Drucksensor (16), insbesondere der Druckluftsteuerungseinrichtung (2), den Systemdruck sensiert und der sensierte Systemdruck als Parameter für eine elektrische Ansteuerung des Zufuhrsteuerventils (12) herangezogen wird.

7. Druckluftsteuerungsverfahren nach Anspruch 5 oder Anspruch 6, soweit auf Anspruch 5 rückbezogen,
**dadurch gekennzeichnet, dass**
nach festgelegten oder erlernbaren Regeln entschieden wird, ob die Lufttrocknungseinrichtung (8) von einem Betriebszustand "Förderung" zum Erhöhen des Steuerdrucks in einen Betriebszustand "Regeneration" zum Spülen der Lufttrocknungseinrichtung (8) umgeschaltet werden soll, wobei in dem Fall, dass in den Betriebszustand "Regeneration" umgeschaltet werden soll, das Zufuhrsteuerventil (12) in seinem ersten Schaltzustand belassen wird, bis eine Umschaltschwelle des Entlüftungssteuerventils (14) erreicht ist,
wobei andernfalls das Zufuhrsteuerventil (12) in seinen zweiten Schaltzustand umgeschaltet wird, sobald der Systemdruck einen erlernten oder festgelegten oberen Grenzwert, der unterhalb der Umschaltschwelle des Entlüftungssteuerventils (14) liegt, erreicht oder überschreitet,
wobei das Zufuhrsteuerventil (12) wieder vom zweiten Schaltzustand in seinen ersten Schaltzustand umgeschaltet wird, wenn entschieden wird, dass in den Betriebszustand "Fördern" des Kompressors (6) zum Ausnutzen einer Schubphase und/oder zum Auslösen des Betriebszustands "Regeneration" der Lufttrocknungseinrichtung (8) umgeschaltet werden soll, wobei der Kompressor (6) spätestens dann, wenn der Systemdruck einen unteren Grenzwert erreicht oder unterschreitet, durch Schalten des Zufuhrsteuerventils (12) in seine erste Schaltstellung in den Betriebszustand "Fördern" versetzt wird
und wobei durch wechselndes Einnehmen der Betriebszustände "Fördern" und "Warten" des Kompressors (6) in Abhängigkeit von wenigstens einem Fahrzeugzustand der Systemdruck in einem Druckband zwischen dem oberen Grenzwert und dem unteren Grenzwert gehalten wird.

8. Elektronische Steuereinrichtung zur Steuerung jeweiliger Betriebszustände eines Kompressors (6) und einer Lufttrocknungseinrichtung (8) mittels eines Druckluftsteuerungsverfahrens nach einem der Ansprüche 4 bis 7 und/oder zur Druckluftsteuerung mittels einer Druckluftsteuerungseinrichtung (2) nach einem der Ansprüche 1 bis 3,
umfassend
- Entscheidungsmittel zum Ermitteln einer ersten Entscheidung, ob die Lufttrocknungseinrichtung (8) einen Betriebszustand "Förderung" oder einen Betriebszustand "Regeneration" einnehmen soll,
- und zum Ermitteln einer zweiten Entscheidung unter Heranziehung der ersten Entscheidung, ob der Kompressor (6) in einem Betriebszustand "Fördern" oder in einen Betriebszustand "Warten" belassen oder in den jeweils anderen Betriebszustand umgeschaltet werden soll,
- Zufuhrsteuerventilansteuerungsmittel zur elektrischen Ansteuerung des Zufuhrsteuerventils (12) gemäß der zweiten Entscheidung und
- insbesondere Mittel zur Steuerung der Verfahrensschritte nach einem der Ansprüche 4 bis 7,
**gekennzeichnet durch**
eine Ausbildung der elektronischen Steuereinrichtung (10) derart, dass durch die Entscheidungsmittel nach festgelegten oder erlernbaren Regeln entscheidbar ist, ob die Lufttrocknungseinrichtung (8) zum Spülen dieser Lufttrocknungseinrichtung (8) vom Betriebszustand "Förderung" in den Betriebszustand "Regeneration" umgeschaltet werden soll,
wobei mittels der Zufuhrsteuerventilansteuerungsmittel in dem Fall, dass in den Betriebszustand "Regeneration" umgeschaltet werden soll, das Zufuhrsteuerventil (12) derart ansteuerbar ist, dass es in seinem ersten Schaltzustand belassen wird, bis eine Umschaltschwelle des Entlüftungssteuerventils (14) erreicht ist,
wobei andernfalls das Zufuhrsteuerventil (12) derart ansteuerbar ist, dass es in seinen zweiten Schaltzustand umgeschaltet wird, sobald der Systemdruck einen erlernten oder festgelegten oberen Grenzwert erreicht oder überschreitet, und nachfolgend derart angesteuert wird, dass das Zufuhrsteuerventil (12) wieder vom zweiten Schaltzustand in seinen ersten Schaltzustand umgeschaltet wird, wenn entschieden wird, dass in den Betriebszustand "Fördern" des Kompressors (6) zum Ausnutzen einer Schubphase und/oder zum Auslösen des Betriebszustands "Regeneration" der Lufttrocknungseinrichtung (8) umgeschaltet werden soll,
und wobei die elektronische Steuereinrichtung (10) derart ausgebildet ist, dass der Kompressor (6) spätestens dann, wenn der Systemdruck einen unteren Grenzwert erreicht oder unterschreitet, durch Schalten des Zufuhrsteuerventils (12) in seine erste Schaltstellung in den Betriebszustand "Fördern" versetzt wird
und dass durch wechselndes Einnehmen der Betriebszustände "Fördern" und "Warten" des Kompressors (6) in Abhängigkeit von wenigstens einem Fahrzeugzustand der Systemdruck in einem Druckband zwischen dem oberen Grenzwert und dem unteren Grenzwert gehalten wird.

9. Elektronische Steuereinrichtung nach Anspruch 8,
**dadurch gekennzeichnet, dass**
die elektronische Steuereinrichtung (10) in eine Motorsteuereinrichtung zur elektronischen Steuerung eines Verbrennungsmotors integriert ist.

10. Druckluftversorgungssystem für ein Fahrzeug mit
- einer Druckluftsteuerungseinrichtung (2) nach einem der Ansprüche 1 bis 3,
- einer elektronischen Steuereinrichtung (10) nach einem der Ansprüche 8 oder 9, mittels der das Zufuhrsteuerventil (12) elektrisch ansteuerbar ist,
- einem Kompressor (6), dessen Steuereingang pneumatisch mit dem Kompressorsteuerausgang (62) der Druckluftsteuerungseinrichtung (2) verbunden ist,
- einer Systemdruckleitung (21), die vom Kompressor (6) mit Druckluft versorgbar ist, die wenigstens einen Anschluss für wenigstens eine Drucklufteinrichtung des Fahrzeugs aufweist und die pneumatisch mit dem Systemdruckeingang (28) der Druckluftsteuerungseinrichtung (2) verbunden ist,
- einer Lufttrocknungseinrichtung (8), die mit einem Druckluftausgang des Kompressors (6) und mit der Systemdruckleitung (21) pneumatisch verbunden ist und durch welche die Systemdruckleitung (21) vom Kompressor (6) mit Druckluft versorgbar ist,
- und insbesondere mit Mitteln zur Durchführung des Druckluftsteuerungsverfahrens nach einem der Ansprüche 4 bis 7.

11. Druckluftversorgungssystem nach Anspruch 10,
**dadurch gekennzeichnet, dass**
die Lufttrocknungseinrichtung (8) Lufttrocknungsmittel (22) und ein pneumatisch betätigbares Entlüftungsventil (42) aufweist, dessen Steuereingang pneumatisch mit der Entlüftungssteuerleitung (38) verbunden ist und mittels dem in Abhängigkeit vom Druck in der Entlüftungssteuerleitung (38) eine Entlüftungsleitung (44) mit einer Entlüftung (46) verbindbar oder gegen diese Entlüftung (46) absperrbar ist,
- wobei im Betriebszustand "Förderung" das Entlüftungsventil (42) abgesperrt ist und die Lufttrocknungsmittel (22) in einer Förderrichtung (F) durchströmbar sind,
- wobei im Betriebszustand "Regeneration" das Entlüftungsventil (42) die Entlüftungsleitung (44) mit der Entlüftung (46) verbindet und die Lufttrocknungsmittel zum Spülen in einer der Förderrichtung (F) entgegengerichteten Regenerationsrichtung (R) durchströmbar und durch die Entlüftungsleitung (44) zur Entlüftung (46) entlüftbar sind,
- wobei die Lufttrocknungseinrichtung (8) in einer die Lufttrocknungsmittel (22) mit der Systemdruckleitung (21) verbindenden Verbindungsleitung (48) einen Spülluftanschluss (52) zu einer Spülluftversorgungsleitung (54) aufweist
- und wobei in der Verbindungsleitung (48) zwischen dem Spülluftanschluss (52) und der Systemdruckleitung (21) ein Rückschlagventil (50) angeordnet ist, mittels dem ein Rückströmen von Druckluft aus der Systemdruckleitung (21) durch die Lufttrocknungsmittel (22) entgegenwirkbar ist.

12. Druckluftversorgungsverfahren für ein Fahrzeug, insbesondere zur Druckluftversorgung mittels eines Druckluftversorgungssystems (4) nach Anspruch 10 oder 11, aufweisend Verfahrensschritte eines Druckluftsteuerungsverfahrens nach einem der Ansprüche 4 bis 7, insbesondere zur Druckluftsteuerung mittels einer Druckluftsteuerungseinrichtung (2) nach einem der Ansprüche 1 bis 3 und/oder mittels einer elektronischen Steuereinrichtung (10) nach einem der Ansprüche 8 oder 9,
- wobei die elektronische Steuereinrichtung (10) das Zufuhrsteuerventil (12) elektrisch ansteuert,
- wobei der Kompressor (6) über eine pneumatische Verbindung seines Steuereingangs mit dem Kompressorsteuerausgang (62) der Druckluftsteuerungseinrichtung (2) gesteuert wird,
- wobei die Systemdruckleitung (21) vom Kompressor (6) mit Druckluft versorgt wird, wenigstens eine Drucklufteinrichtung des Fahrzeugs über wenigstens einen Anschluss mit Druckluft versorgt und den Systemdruck über den Systemdruckeingang (28) der Druckluftsteuerungseinrichtung (2) zuführt
- und wobei die Systemdruckleitung (21) durch die Lufttrocknungseinrichtung (8) vom Kompressor (6) mit Druckluft versorgt wird.

13. Druckluftversorgungsverfahren nach Anspruch 12,
**dadurch gekennzeichnet, dass**
im Betriebszustand "Förderung" der Lufttrocknungseinrichtung (8)
- Lufttrocknungsmittel (22) der Lufttrocknungseinrichtung (8) in einer Förderrichtung (F) von Druckluft durchströmt werden und dabei Feuchtigkeit aus dieser Druckluft herausfiltern,
- wobei ein Entlüftungsventil (42) über die an seinem Steueranschluss angeschlossene Entlüftungssteuerleitung (38) von der Druckluftsteuerungseinrichtung (2) derart pneumatisch angesteuert wird, dass dieses Entlüftungsventil (42) eine Entlüftungsleitung (44) gegen eine Entlüftung (46) absperrt,
und dass im Betriebszustand "Regeneration" der Lufttrocknungseinrichtung (8)
- die Lufttrocknungsmittel zum Spülen in einer der Förderrichtung (F) entgegengerichteten Regenerationsrichtung (R) durchströmt werden, wobei das Entlüftungsventil (42) über die Entlüftungssteuerleitung (38) von der Druckluftsteuerungseinrichtung (2) derart pneumatisch angesteuert wird, dass die Lufttrocknungsmittel (22) durch die Entlüftungsleitung (44) zur Entlüftung (46) entlüftet werden,
- wobei Druckluft zum Spülen der Lufttrocknungsmittel (22) durch eine Spülluftversorgungsleitung (54), einen Spülluftanschluss (52) einer Verbindungsleitung (48) und diese Verbindungsleitung (48), welche die Lufttrocknungsmittel (22) mit der Systemdruckleitung (21) verbindet, zugeführt wird,
- und wobei ein Rückschlagventil (50) in der Verbindungsleitung (48) zwischen dem Spülluftanschluss (52) und der Systemdruckleitung (21) einem Rückströmen von Druckluft aus der Systemdruckleitung (21) durch die Lufttrocknungsmittel (22) entgegenwirkt.

14. Fahrzeug, insbesondere Nutzfahrzeug,
- mit einer Druckluftversorgungseinrichtung (2) nach einem der Ansprüche 1 bis 3
- und/oder mit einer elektrischen Steuereinrichtung (10) nach einem der Ansprüche 8 oder 9
- und/oder mit einem Druckluftversorgungssystem (4) nach Anspruch 10 oder 11
- und/oder mit Mitteln zur Durchführung des Verfahrens nach einem der Ansprüche 4 bis 7
- und/oder mit Mitteln zur Durchführung des Verfahrens nach Anspruch 12 oder 13
- und mit wenigstens einer Drucklufteinrichtung, die über wenigstens einen Anschluss zur Systemdruckleitung (21) mit Druckluft versorgbar ist.

## Claims

1. Compressed air control device (2) for controlling respective operating states of a compressor (6) and of an air drying device (8),
- wherein the compressed air control device (2) comprises a compressor control outlet (62) via which it may be pneumatically connected to a control inlet of the compressor (6) for pneumatically switching the operating state of the compressor (6),
- wherein the compressed air control device (2) comprises a system pressure inlet (28) via which it may be pneumatically connected to a system pressure line (21) which conducts a system pressure produced by the compressor (6),
- wherein the compressed air control device (2) comprises a ventilation control outlet via which it may be pneumatically connected to a control inlet of the air drying device (8) for pneumatically switching the operating state of the air drying device (8),
- and wherein the compressed air control device (2) comprises a ventilation control valve (14) which is pneumatically actuatable and via which the system pressure inlet (28) may be pneumatically connected to the ventilation control outlet (36), depending on the system pressure, for switching the operating state of the air drying device (8),
comprising
an electrically actuatable supply control valve (12), by means of which the system pressure inlet (28) may be pneumatically connected to the compressor control outlet (62), irrespective of the system pressure, for switching the operating state of the compressor (6),
**characterized in that**
the supply control valve (12) comprises two switching states, wherein the compressor control outlet (62), in each case irrespective of the system pressure, is pneumatically connected in a first switching state to the ventilation control outlet (36) or to a vent (84) and in a second switching state to the system pressure inlet (28) .

2. Compressed air control device according to Claim 1,
**characterized by**
a pressure sensor (16) which is connected pneumatically to the system pressure inlet (28).

3. Compressed air control device according to either of Claims 1 and 2,
**characterized in that**
the compressed air control device (2) is configured as a complete structural unit or comprises a first structural unit (70) with the ventilation control valve (14) and a second structural unit (72) with the supply control valve (12) which may be mechanically and pneumatically connected to the first unit, wherein the compressed air control device (2), in particular the unit (72) with the supply control valve (12), is configured such that it may be flanged to the compressor (6).

4. Compressed air control method, in particular for compressed air control by means of a compressed air control device (2) according to one of Claims 1 to 3, by which respective operating states of a compressor (6) and of an air drying device (8) are controlled,
- wherein the compressed air control device (2) pneumatically switches the operating state of the compressor (6) via a compressor control outlet (62) which is connected to a control inlet of the compressor (6),
- wherein the compressed air control device (2), via a system pressure inlet (28), draws compressed air at a system pressure produced by the compressor (6) from a system pressure line (21),
- wherein the compressed air control device (2), via a ventilation control outlet (36) which is pneumatically connected to a control inlet of the air drying device, pneumatically switches the operating state of the air drying device (8) and
- wherein a pneumatically actuatable ventilation control valve (14) of the compressed air control device (2) switches the operating state of the air drying device (8) by making it possible to connect or by connecting the system pressure inlet (28) pneumatically to the ventilation control outlet (36), depending on the system pressure,
**characterized in that**
an electrically actuatable supply control valve (12) of the compressed air control device (2) switches the operating state of the compressor (6) by connecting the system pressure inlet (28) pneumatically to the compressor control outlet (62) irrespective of the system pressure or shutting off said system pressure inlet (28) from a connection to the system pressure inlet (28) irrespective of the system pressure.

5. Compressed air control method according to Claim 4,
**characterized in that**
the supply control valve (12) comprises two switching states, wherein the supply control valve (12), in particular in each case irrespective of the system pressure, pneumatically connects the compressor control outlet (62) in the case of a first switching state to the ventilation control outlet (36) or to a vent (84) and in the case of a second switching state to the system pressure inlet (28).

6. Compressed air control method according to Claim 4 or 5,
**characterized in that**
a pressure sensor (16), in particular of the compressed air control device (2), detects the system pressure and the detected system pressure is used as a parameter for an electrical activation of the supply control valve (12) .

7. Compressed air control method according to Claim 5 or Claim 6, referring back to Claim 5,
**characterized in that**
according to established or learnable rules the decision is made as to whether the air drying device (8) is to be switched from a "delivery" operating state to increase the control pressure into a "regeneration" operating state to flush the air drying device (8), wherein, in the event that it is intended to switch into the "regeneration" operating state, the supply control valve (12) is left in its first switching state until a switching threshold of the ventilation control valve (14) is reached,
wherein otherwise the supply control valve (12) is switched into its second switching state as soon as the system pressure reaches or exceeds a learned or established upper limit value which lies below the switching threshold of the ventilation control valve (14),
wherein the supply control valve (12) is switched again from the second switching state into its first switching state, when the decision is made that it is to be switched to the "delivering" operating state of the compressor (6) for utilizing a coasting phase and/or for triggering the "regeneration" operating state of the air drying device (8),
wherein the compressor (6) is shifted into the "delivering" operating state at the latest when the system pressure reaches or falls below a lower limit value, by switching the supply control valve (12) into its first switching position
and wherein, by the compressor (6) alternately adopting the "delivering" and "holding" operating states, depending on at least one vehicle state, the system pressure is kept in a pressure range between the upper limit value and the lower limit value.

8. Electronic control device for controlling respective operating states of a compressor (6) and of an air drying device (8) by means of a compressed air control method according to one of Claims 4 to 7, and/or for compressed air control by means of a compressed air control device (2) according to one of Claims 1 to 3, comprising
- decision means for determining a first decision as to whether the air drying device (8) is to adopt a "delivery" operating state or a "regeneration" operating state,
- and for determining a second decision by using the first decision as to whether the compressor (6) is to be left in a "delivering" operating state or in a "holding" operating state or switched to the respective other operating state,
- supply control valve activation means for electrical activation of the supply control valve (12) according to the second decision and
- in particular means for controlling the method steps according to one of Claims 4 to 7,
**characterized by**
a configuration of the electronic control device (10) such that by the decision means according to established or learnable rules the decision may be made as to whether the air drying device (8) is to be switched from the "delivery" operating state into the "regeneration" operating state to flush said air drying device (8), wherein by means of the supply control valve activation means, in the event that it is intended to switch into the "regeneration" operating state, the supply control valve (12) may be activated such that it is left in its first switching state, until a switching threshold of the ventilation control valve (14) is reached,
wherein otherwise the supply control valve (12) may be activated such that it is switched into its second switching state, as soon as the system pressure reaches or exceeds a learned or established upper limit value and is subsequently activated such that the supply control valve (12) is again switched from the second switching state into its first switching state, when the decision is made that it is to be switched into the "delivering" operating state of the compressor (6) for utilizing a coasting phase and/or for triggering the "regeneration" operating state of the air drying device (8),
and wherein the electronic control device (10) is configured such that the compressor (6) is shifted into the "delivering" operating state by switching the supply control valve (12) into its first switching position, at the latest when the system pressure reaches or falls below a lower limit value,
and in that the system pressure is kept in a pressure range between the upper limit value and the lower limit value by the compressor (6) alternately adopting the "delivering" and "holding" operating states, depending on at least one vehicle state.

9. Electronic control device according to Claim 8,
**characterized in that**
the electronic control device (10) is integrated in an engine control device for electronic control of an internal combustion engine.

10. Compressed air supply system for a vehicle comprising
- a compressed air control device (2) according to one of Claims 1 to 3,
- an electronic control device (10) according to either of Claims 8 and 9, by means of which the supply control valve (12) may be electrically activated,
- a compressor (6), the control inlet thereof being pneumatically connected to the compressor control outlet (62) of the compressed air control device (2),
- a system pressure line (21) which may be supplied with compressed air from the compressor (6), said system pressure line (21) comprising at least one connector for at least one compressed air device of the vehicle, and which is pneumatically connected to the system pressure inlet (28) of the compressed air control device (2),
- an air drying device (8) which is pneumatically connected to a compressed air outlet of the compressor (6) and to the system pressure line (21) and by which the system pressure line (21) may be supplied with compressed air from the compressor (6),
- and, in particular, comprising means for carrying out the compressed air control method according to one of Claims 4 to 7.

11. Compressed air supply system according to Claim 10, **characterized in that**
the air drying device (8) comprises air drying means (22) and a pneumatically actuatable ventilation valve (42), the control inlet thereof being pneumatically connected to the ventilation control line (38) and by means of which, depending on the pressure in the ventilation control line (38), a ventilation line (44) may be connected to a vent (46) or may be shut off from said vent (46),
- wherein in the "delivery" operating state the ventilation valve (42) is shut off, and air may flow through the air drying means (22) in a delivery direction (F),
- wherein in the "regeneration" operating state the ventilation valve (42) connects the ventilation line (44) to the vent (46) and air may flow through the air drying means for flushing in a regeneration direction (R) oriented counter to the delivery direction (F) and the air drying means may be vented by the ventilation line (44) to the vent (46),
- wherein the air drying device (8) in a connecting line (48) connecting the air drying means (22) to the system pressure line (21) comprises a flushing air connector (52) to a flushing air supply line (54)
- and wherein a non-return valve (50) is arranged in the connecting line (48) between the flushing air connector (52) and the system pressure line (21), by means of which non-return valve (50) a return flow of compressed air from the system pressure line (21) is able to be counteracted by the air drying means (22).

12. Compressed air supply method for a vehicle, in particular for the supply of compressed air by means of a compressed air supply system (4) according to Claim 10 or 11, comprising the method steps of a compressed air control method according to one of Claims 4 to 7, in particular for compressed air control by means of a compressed air control device (2) according to one of Claims 1 to 3 and/or by means of an electronic control device (10) according to either of Claims 8 and 9,
- wherein the electronic control device (10) electrically activates the supply control valve (12),
- wherein the compressor (6) is controlled via a pneumatic connection of its control inlet to the compressor control outlet (62) of the compressed air control device (2),
- wherein the system pressure line (21) is supplied with compressed air from the compressor (6), at least one compressed air device of the vehicle is supplied with compressed air via at least one connector and supplies the system pressure via the system pressure inlet (28) of the compressed air control device (2),
- and wherein the system pressure line (21) is supplied by the air drying device (8) with compressed air from the compressor (6).

13. Compressed air supply method according to Claim 12, **characterized in that**
in the "delivery" operating state of the air drying device (8)
- compressed air flows through air drying means (22) of the air drying device (8) in a delivery direction (F) and at the same time said air drying means (22) filter moisture out of said compressed air,
- wherein a ventilation valve (42) is pneumatically activated via the ventilation control line (38) connected to its control connector by the compressed air control device (2) such that said ventilation valve (42) shuts off a ventilation line (44) from a vent (46),
and **in that** in the "regeneration" operating state of the air drying device (8),
- air flows through the air drying means for flushing in a regeneration direction (R) oriented counter to the delivery direction (F), wherein the ventilation valve (42) is pneumatically activated via the ventilation control line (38) by the compressed air control device (2), such that the air drying means (22) are vented by the ventilation line (44) to the vent (46),
- wherein compressed air for flushing the air drying means (22) is supplied by a flushing air supply line (54), a flushing air connector (52) of a connecting line (48) and said connecting line (48) which connects the air drying means (22) to the system pressure line (21),
- and wherein a non-return valve (50) in the connecting line (48) between the flushing air connector (52) and the system pressure line (21) counteracts a return flow of compressed air from the system pressure line (21) through the air drying means (22).

14. Vehicle, in particular utility vehicle,
- comprising a compressed air supply device (2) according to one of Claims 1 to 3
- and/or comprising an electrical control device (10) according to either of Claims 8 and 9
- and/or comprising a compressed air supply system (4) according to Claim 10 or 11
- and/or comprising means for carrying out the method according to one of Claims 4 to 7
- and/or comprising means for carrying out the method according to Claim 12 or 13
- and comprising at least one compressed air device which may be supplied with compressed air via at least one connector to the system pressure line (21).

## Revendications

1. Dispositif (2) de commande d'air comprimé destiné à commander les différents états de fonctionnement d'un compresseur (6) et d'un dispositif (8) de séchage d'air,
le dispositif (2) de commande d'air comprimé présentant une sortie (62) de commande de compresseur par laquelle il peut être relié pneumatiquement à une entrée de commande du compresseur (6) pour commuter pneumatiquement l'état de fonctionnement du compresseur (6),
le dispositif (2) de commande d'air comprimé présentant une entrée (28) de pression de système par laquelle il peut être relié pneumatiquement à un conduit (21) de pression du système qui conduit la pression du système formée par le compresseur (6),
le dispositif (2) de commande d'air comprimé présentant une sortie de commande d'évent par laquelle il peut être relié pneumatiquement à une entrée de commande du dispositif (8) de séchage d'air pour la commutation pneumatique de l'état de fonctionnement du dispositif (8) de séchage d'air,
le dispositif (2) de commande d'air comprimé présentant une soupape (14) de commande d'évent qui peut être actionnée pneumatiquement et au moyen de laquelle l'entrée (28) de pression du système peut être reliée pneumatiquement à la sortie (36) de commande d'évent en fonction de la pression du système pour commuter l'état de fonctionnement du dispositif (8) de séchage d'air,
comprenant
une soupape (12) de commande d'amenée pouvant être actionnée électriquement, au moyen de laquelle l'entrée (28) de pression du système peut être reliée pneumatiquement à la sortie (62) de commande du compresseur indépendamment de la pression du système pour commuter l'état de fonctionnement du compresseur (6),
**caractérisé en ce que** la soupape (12) de commande d'amenée présente deux états de commutation, la sortie (62) de commande du compresseur étant dans un premier état de commutation raccordée pneumatiquement à la sortie (36) de commande d'évent ou à un évent (84) et dans un deuxième état de commutation à l'entrée (28) de pression du système, en particulier de manière indépendante de la pression du système.

2. Dispositif de commande d'air comprimé selon la revendication 1, **caractérisé par** un capteur de pression (16) qui est raccordé pneumatiquement à l'entrée (28) de pression du système.

3. Dispositif de commande d'air comprimé selon l'une des revendications 1 et 2, **caractérisé en ce que** le dispositif (2) de commande d'air comprimé est configuré comme module global unitaire ou présente un premier module unitaire (70) doté de la soupape (14) de commande d'évent et un deuxième module unitaire (72) pouvant être relié mécaniquement et pneumatiquement au premier module unitaire et doté de la soupape (12) de commande d'amenée, le dispositif (2) de commande d'air comprimé et en particulier le module unitaire (72) doté de la soupape (12) de commande d'amenée étant configuré de manière à pouvoir être raccordé au compresseur (6) à l'aide d'une bride.

4. Procédé de commande d'air comprimé, en particulier pour la commande d'air comprimé au moyen d'un dispositif (2) de commande d'air comprimé selon l'une des revendications 1 à 3 par lequel les différents états de fonctionnement d'un compresseur (6) et d'un dispositif (8) de séchage d'air sont commandés,
le dispositif (2) de commande d'air comprimé commutant pneumatiquement l'état de fonctionnement du compresseur (6) par l'intermédiaire d'une sortie (62) de commande de compresseur raccordée à une entrée de commande du compresseur (6),
le dispositif (2) de commande d'air comprimé extrayant d'un conduit (21) de pression du système par l'intermédiaire d'une entrée (28) de pression du système de l'air comprimé avec une pression du système formée par le compresseur (6),
le dispositif (2) de commande d'air comprimé commutant pneumatiquement l'état de fonctionnement du dispositif (8) de séchage d'air par l'intermédiaire d'une sortie (36) de commande d'évent raccordée pneumatiquement à une entrée de commande du dispositif de séchage d'air et
une soupape (14) de commande d'évent pouvant être actionnée pneumatiquement du dispositif (2) de commande d'air comprimé commutant l'état de fonctionnement du dispositif (8) de séchage d'air en raccordant pneumatiquement ou en permettant le raccordement pneumatique de l'entrée (28) de pression du système à la sortie (36) de commande d'évent en fonction de la pression du système,
**caractérisé en ce que**
une soupape (12) de commande d'amenée pouvant être actionnée électriquement du dispositif (2) de commande d'air comprimé commute l'état de fonctionnement du compresseur (6) en reliant pneumatiquement l'entrée (28) de pression du système à la sortie (62) de commande du compresseur indépendamment de la pression du système ou en bloquant un raccordement à l'entrée (28) de pression du système indépendant de la pression du système.

5. Procédé de commande d'air comprimé selon la revendication 4, **caractérisé en ce que** la soupape (12) de commande d'amenée présente deux états de commutation, la soupape (12) de commande d'amenée raccordant pneumatiquement et notamment à chaque fois de manière indépendante de la pression du système la sortie (62) de commande du compresseur à la sortie (36) de commande d'évent ou à un évent (84) dans un premier état de commutation et à l'entrée (28) de pression du système dans un deuxième état de commutation.

6. Procédé de commande d'air comprimé selon la revendication 4 ou 5, **caractérisé en ce qu'**un capteur de pression (16), en particulier du dispositif (2) de commande d'air comprimé, capte la pression du système et la pression du système qui a été captée intervient comme paramètre pour la commande électrique de la soupape (12) de commande d'amenée.

7. Procédé de commande d'air comprimé selon la revendication 5 ou la revendication 6 dans la mesure où elle se rapporte à la revendication 5, **caractérisé en ce qu'**il est décidé selon des règles fixées ou pouvant être apprises si le dispositif (8) de séchage d'air doit être commuté de l'état de fonctionnement "refoulement" destiné à augmenter la pression de commande à un état de fonctionnement "régénération" destiné à rincer le dispositif (8) de séchage d'air, au cas où il faut basculer dans l'état de fonctionnement "régénération", la soupape (12) de commande d'amenée étant maintenue dans son premier état de commutation jusqu'à ce qu'un seuil de commutation de la soupape (14) de commande d'évent soit atteint, dans lequel sinon, la soupape (12) de commande d'amenée est commutée dans son deuxième état de commutation dès que la pression du système a atteint ou dépasse une valeur limite supérieure apprise ou fixée située en dessous du seuil de commutation de la soupape (14) de commande d'évent, dans lequel la soupape (12) d'amenée d'air est recommutée de son deuxième état de commutation à son premier état de commutation s'il est décidé qu'il faut commuter dans l'état de fonctionnement "refoulement" du compresseur (6) pour utiliser complètement une phase de poussée et/ou pour déclencher l'état de fonctionnement "régénération" du dispositif (8) de séchage d'air, dans lequel au plus tard lorsque la pression du système a atteint ou est devenue inférieure à une valeur limite inférieure, le compresseur (6) est amené dans l'état de fonctionnement "refoulement" en commutant la soupape (12) de commande d'amenée dans sa première position de commutation et dans lequel par établissement alterné des états de fonctionnement "refoulement" et "attente" du compresseur (6), la pression du système est maintenue dans une bande de pression située entre la valeur limite supérieure et la valeur limite inférieure en fonction d'au moins un état du véhicule.

8. Dispositif électronique de commande pour commander les différents états de fonctionnement d'un compresseur (6) et d'un dispositif (8) de séchage d'air au moyen d'un procédé de commande d'air comprimé selon l'une des revendications 4 à 7 et/ou pour commander l'air comprimé au moyen d'un dispositif (2) de commande d'air comprimé selon l'une des revendications 1 à 3, comprenant
des moyens de décision pour déterminer une première décision pour savoir si le dispositif (8) de séchage d'air doit prendre un état de fonctionnement "refoulement" ou un état de fonctionnement "régénération"
et pour déterminer une deuxième décision, dans laquelle intervient la première décision, pour savoir si le compresseur (6) doit être maintenu dans un état de fonctionnement "refoulement" ou dans un état de fonctionnement "attente" ou être commuté dans l'autre état de fonctionnement respectif,
des moyens de commande d'une soupape de commande d'amenée pour commander électriquement la soupape (12) de commande d'amenée en fonction de la deuxième décision et
en particulier, des moyens de commande des étapes du procédé selon l'une des revendications 4 à 7, **caractérisé par** une configuration du dispositif électronique de commande (10) de telle sorte que les moyens de décision permettent de décider selon des règles fixées ou des règles pouvant être apprises si le dispositif (8) de séchage d'air doit être commuté de l'état de fonctionnement "refoulement" à l'état de fonctionnement "régénération" pour rincer ce dispositif (8) de séchage d'air, dans lequel, au cas où il faut commuter dans l'état de fonctionnement "régénération" au moyen des moyens de commande de soupape de commande d'amenée, la soupape (12) de commande d'amenée peut être commandée de manière à être laissée dans son premier état de commutation jusqu'à ce qu'un seuil de commutation de la soupape (14) de commande d'évent soit atteint, et dans lequel sinon, la soupape (12) de commande d'amenée peut être commandée de telle sorte qu'elle soit commutée dans son deuxième état de commutation dès que la pression du système a atteint ou dépassé une valeur limite supérieure apprise ou fixée et est ensuite commandée de telle sorte que la soupape (12) de commande d'amenée soit recommutée du deuxième état de commutation à son premier état de commutation lorsqu'il est décidé qu'il faut commuter dans l'état de fonctionnement "refoulement" du compresseur (6) pour utiliser complètement une phase de poussée et/ou pour déclencher l'état de fonctionnement "régénération" du dispositif (8) de séchage d'air,
et le dispositif électronique de commande (10) étant configuré de telle sorte qu'au plus tard lorsque la pression du système atteint ou est devenue inférieure à une valeur limite inférieure, le compresseur (6) est amené dans l'état de fonctionnement "refoulement" en commutant la soupape (12) de commande d'amenée dans sa première position de commutation et de telle sorte que par établissement alterné des états de fonctionnement "refoulement" et "attente" du compresseur (6), la pression du système est maintenue dans une bande de pression située entre la valeur limite supérieure et la valeur limite inférieure en fonction d'au moins un état du véhicule.

9. Dispositif électronique de commande selon la revendication 8, **caractérisé en ce que** le dispositif électronique de commande (10) est intégré dans un dispositif de commande de moteur destiné à commander électroniquement un moteur à combustion interne.

10. Système d'alimentation en air comprimé pour un véhicule, le système présentant
un dispositif (2) de commande d'air comprimé selon l'une des revendications 1 à 3,
un dispositif électronique de commande (10) selon l'une des revendications 8 et 9, au moyen duquel la soupape (12) de commande d'amenée peut être commandée électriquement,
un compresseur (6) dont l'entrée de commande est raccordée pneumatiquement à la sortie (62) de commande de compresseur du dispositif (2) de commande d'air comprimé,
un conduit (21) de pression du système qui peut être alimenté en air comprimé par le compresseur (6), qui présente au moins un raccordement pour au moins un dispositif d'air comprimé du véhicule et qui est relié pneumatiquement à l'entrée (28) de pression du système du dispositif (2) de commande d'air comprimé,
un dispositif (8) de séchage d'air raccordé pneumatiquement à la sortie d'air comprimé du compresseur (6) et au conduit (21) de pression du système et par lequel le conduit (21) de pression du système peut être alimenté en air comprimé provenant du compresseur (6) et
et en particulier, des moyens permettant d'exécuter le procédé de commande d'air comprimé selon l'une des revendications 4 à 7.

11. Système d'alimentation en air comprimé selon la revendication 10, **caractérisé en ce que** le dispositif (8) de séchage d'air présente des moyens (22) de séchage d'air et une soupape d'évent (42) actionnable pneumatiquement, dont l'entrée de commande est raccordée pneumatiquement au conduit (38) de commande d'évent et au moyen de laquelle un conduit d'évent (44) peut être raccordé à un évent (46) ou séparé de cet évent (46) en fonction de la pression dans le conduit (38) de commande d'évent,
dans lequel, dans l'état de fonctionnement "refoulement", la soupape d'évent (42) est bloquée et les moyens (22) de séchage d'air peuvent être traversés dans une direction de refoulement (F),
dans lequel, dans l'état de fonctionnement "régénération", la soupape d'évent (42) relie le conduit d'évent (44) à l'évent (46) et les moyens de séchage d'air peuvent être traversés dans une direction de régénération (R) opposée à la direction de refoulement (F) en vue d'un rinçage et peuvent être vidés de leur air par le conduit d'évent (44) vers l'évent (46),
dans lequel le dispositif (8) de séchage d'air présente, dans un conduit (48) de liaison qui relie les moyens (22) de séchage d'air au conduit (21) de pression du système, un raccordement (52) d'air de rinçage qui conduit à un conduit (54) d'alimentation en air de rinçage et
dans lequel une soupape anti-retour (50) est disposée dans le conduit de liaison (48) entre le raccordement (52) d'air de rinçage et le conduit (21) de pression du système et permet d'empêcher un retour de l'air comprimé à travers les moyens (22) de séchage d'air depuis le conduit (21) de pression du système.

12. Procédé d'alimentation en air comprimé pour un véhicule, en particulier pour l'alimentation en air comprimé au moyen d'un système (4) d'alimentation en air comprimé selon la revendication 10 ou 11, le procédé présentant les étapes de procédé d'un procédé de commande d'air comprimé selon l'une des revendications 4 à 7, en particulier pour la commande d'air comprimé au moyen d'un dispositif (2) de commande d'air comprimé selon l'une des revendications 1 à 3 et/ou au moyen d'un dispositif électronique de commande (10) selon l'une des revendications 8 et 9,
dans lequel le dispositif électronique de commande (10) commande électriquement la soupape (12) de commande d'amenée,
dans lequel le compresseur (6) est commandé par l'intermédiaire d'une liaison pneumatique entre son entrée de commande et la sortie (62) de commande de compresseur du dispositif (2) de commande d'air comprimé,
dans lequel le conduit (21) de pression du système est alimenté en air comprimé par le compresseur (6), alimente en air comprimé au moins un dispositif d'air comprimé du véhicule par l'intermédiaire d'au moins un raccordement et amène la pression du système par l'intermédiaire de l'entrée (28) de pression du système du dispositif (2) de commande d'air comprimé et
dans lequel le conduit (21) de pression du système est alimenté en air comprimé par le compresseur (6) par l'intermédiaire du dispositif (8) de séchage d'air.

13. Procédé d'alimentation en air comprimé selon la revendication 12, **caractérisé en ce que** lorsque le dispositif (8) de séchage d'air est dans l'état de fonctionnement "refoulement",
des moyens (22) de séchage d'air du dispositif (8) de séchage d'air sont traversés par l'air comprimé dans une direction de refoulement (F) et ils extraient ainsi l'humidité de cet air comprimé,
dans lequel une soupape d'évent (42) est commandée pneumatiquement par le dispositif (2) de commande d'air comprimé par l'intermédiaire du conduit (38) de commande d'évent raccordé à son entrée de commande de telle sorte que cette soupape d'évent (42) sépare un conduit d'évent (44) d'un évent (46),
et **en ce que** lorsque le dispositif (8) de séchage d'air est dans l'état de fonctionnement "régénération",
les moyens de séchage d'air sont traversés dans une direction de régénération (R) opposée à la direction de refoulement (F), en vue du rinçage, dans lequel la soupape d'évent (42) est commandée pneumatiquement par le dispositif (2) de commande d'air comprimé par l'intermédiaire du conduit (38) de commande d'évent de telle sorte que les moyens (22) de séchage d'air soient vidés de leur air par le conduit (44) d'évent vers l'évent (46),
dans lequel pour rincer les moyens (22) de séchage d'air, l'air comprimé est amené par un conduit (54) d'alimentation en air de rinçage, un raccordement (52) d'air de rinçage d'un conduit de liaison (48) et ce conduit de liaison (48) qui relie les moyens (22) de séchage d'air au conduit (21) de pression du système
et dans lequel une soupape anti-retour (50) dans le conduit de liaison (48) entre le raccordement (52) d'air de rinçage et le conduit (21) de pression du système s'oppose à un retour de l'air comprimé à travers les moyens (22) de séchage d'air depuis le conduit (21) de pression du système.

14. Véhicule, notamment véhicule utilitaire, présentant
un dispositif (2) d'alimentation en air comprimé selon l'une des revendications 1 à 3,
et/ou un dispositif électrique de commande (10) selon l'une des revendications 8 et 9,
et/ou un système (4) d'alimentation en air comprimé selon la revendication 10 ou 11,
et/ou des moyens permettant d'exécuter le procédé selon l'une des revendications 4 à 7,
et/ou des moyens permettant d'exécuter le procédé selon la revendication 12 ou 13 et
au moins un dispositif d'air comprimé qui peut être alimenté en air comprimé par au moins un raccordement au conduit (21) de pression du système.
